# FASCICULE DE BREVET EUROPEEN

(11) **EP 2 333 805 B1**
(45) Date de publication et mention de la délivrance du brevet: **13.05.2015**
(21) Numéro de dépôt: 10354075.3
(22) Date de dépôt: 15.11.2010
(51) Int. Cl.: H01H 89/08, H01H 89/06

(54) **Dispositif de coupure à télécommandé et dispositif de distribution électrique pourvu d'un tel dispositif de coupure**
Ferngesteuerte Unterbrechungsvorrichtung, und mit dieser Unterbrechungsvorrichtung ausgestattete Stromverteilungsvorrichtung
Remotely controlled switchgear and power distribution device provided with such a switchgear

(30) Priorité: 11.12.2009 FR 0905989; 11.12.2009 FR 0905988
(43) Date de publication de la demande: 15.06.2011
(73) Titulaire: Schneider Electric Industries SAS, 92500 Rueil-Malmaison (FR)
(72) Inventeur: Michaux, Marie-Laure, 38050 Grenoble Cedex 09 (FR); Paupert, Marc, 38050 Grenoble Cedex 09 (FR); Duchemin, Jean-Pierre, 38050 Grenoble Cedex 09 (FR); Reymond, Bruno, 38050 Grenoble Cedex 09 (FR); Follic, Stéphane, 38050 Grenoble Cedex 09 (FR)
(74) Mandataire: Colette, Marie-Françoise

(56) Documents cités:
- EP-A1- 0 108 678
- EP-A1- 0 535 844

## Description

### DOMAINE TECHNIQUE DE L'INVENTION

L'invention relève du domaine des dispositifs de protection et de commande d'installation électrique, généralement basse tension. Ces dispositifs sont généralement destinés à être montés dans des tableaux électriques de distribution terminale. Ces dispositifs sont souvent adaptés pour être installés sur des circuits de départ disposés en aval d'un dispositif limiteur de tension.

L'invention concerne, en particulier, un dispositif de coupure à télécommande, ledit dispositif de coupure comprenant :
- un contact principal mobile coopérant en position de fermeture avec un contact principal fixe,
- un actionneur de commande commandé par un circuit de commande pour faire déplacer ledit contact mobile de la position de fermeture à une position d'ouverture dans un sens ou dans l'autre, et
- des moyens de déclenchement apte à déclencher en cas de défaut électrique et coopérant avec un mécanisme de déclenchement.

L'invention concerne également un dispositif de distribution électrique comprenant un dispositif limiteur de courant disposé en amont d'au moins un circuit de départ pourvu d'un dispositif de coupure.

### ÉTAT DE LA TECHNIQUE

La demande de brevet française FR2535520 décrit un appareil de coupure télécommandé à boîtier moulé constitué par un bloc de coupure auquel est accouplé un bloc de télécommande. Cet appareil de coupure comporte un mécanisme de déclenchement et un mécanisme de télécommande coopérant pour agir sur les contacts principaux mobiles.

Un inconvénient de cet appareil de coupure est que les mécanismes de télécommande sont complexes et encombrants.

Le document EP 0 535 844 A1 décrit un dispositif de coupure à télécommande selon le préambule de la revendication 1.

### EXPOSÉ DE L'INVENTION

L'invention vise à remédier aux inconvénients des dispositifs de coupure de l'art antérieur en proposant un dispositif de coupure à télécommande comprenant :
- un contact principal mobile coopérant en position de fermeture avec un contact principal fixe,
- un actionneur de commande commandé par un circuit de commande pour faire déplacer ledit contact principal mobile de la position de fermeture à une position d'ouverture dans un sens ou dans l'autre, et
- des moyens de déclenchement apte à déclencher en cas de défaut électrique et coopérant avec un mécanisme de déclenchement,

ledit dispositif étant caractérisé en ce que ledit circuit de commande comporte un contact de commande mobile actionné par ledit mécanisme de déclenchement pour faire déplacer ledit contact principal mobile de la position de fermeture à la position d'ouverture en réponse à un défaut électrique, ledit contact de commande mobile pouvant se fermer sur un contact de commande fixe disposé sur un socle dudit actionneur de commande.

De préférence, le circuit de commande de l'actionneur de commande comporte des moyens redresseurs disposés sur le socle dudit actionneur de commande.

Selon un mode de réalisation, l'actionneur de commande comporte une bobine pour déplacer un noyau plongeur couplé au contact principal mobile lorsqu'un courant d'excitation circule dans ladite bobine, ladite bobine comportant une première bobine d'appel et une seconde bobine de maintien, le circuit de commande dudit actionneur de commande comportant un contact mobile de fin de course coopérant avec ledit noyau plongeur et agencé dans ledit circuit de commande pour réduire le courant dans ladite bobine lorsque ledit noyau plongeur est dans une position déployée correspondant à la position de fermeture dudit contact principal mobile. De préférence, le contact mobile de fin de course est destiné à s'ouvrir, par rapport à un contact fixe de fin de course, lorsque le noyau plongeur est dans une position déployée correspondant à la position de fermeture du contact principal mobile. Avantageusement, la première bobine d'appel et la seconde bobine de maintien sont disposés en série, les contacts de fin de course étant disposés en parallèle avec ladite seconde bobine de maintien. Alternativement, la première bobine d'appel et la seconde bobine de maintien sont disposées en parallèle, les contacts de fin de course étant disposés en série avec ladite première bobine de d'appel.

De préférence, le contact fixe de fin de course est disposé sur le socle dudit actionneur de commande.

Selon une autre caractéristique, les moyens de déclenchement, le mécanisme de déclenchement et l'actionneur de commande sont montés sur une cloison séparant un circuit de phase d'un circuit de neutre dudit dispositif, le tout formant un sous-ensemble amovible.

Selon une autre caractéristique, le dispositif de coupure à télécommande étant logé dans un boîtier pourvu de faces principales et de faces de connexions sensiblement perpendiculaires aux dites faces principales et pourvues d'ouvertures permettant l'accès à des bornes de raccordement, ledit dispositif de coupure comprenant un actionneur de commande commandé par un circuit de commande pour faire déplacer ledit contact principal mobile de la position de fermeture à une position d'ouverture dans un sens ou dans l'autre au moyen d'un contact de commande mobile dudit circuit de commande, et des moyens de déclenchement pourvus de moyens de déclenchement magnétique et d'une bilame coopérant avec un mécanisme de déclenchement, ce dispositif est caractérisé en ce que ledit mécanisme de déclenchement coopère avec ledit contact de commande mobile pour ouvrir ledit contact principal mobile de la position de fermeture à la position d'ouverture en réponse à un défaut électrique, et en ce que les moyens de déclenchement magnétiques et la bilame sont disposés dans un plan sensiblement parallèle aux faces de connexions.

Selon une autre caractéristique, la bilame s'étend entre deux plans sensiblement parallèles aux faces de connexions dans les limites des moyens de déclenchement magnétique (45).

Selon une autre caractéristique, la déflexion de la bilame s'effectue dans un plan parallèle et selon une direction sensiblement perpendiculaire à un axe d'actionnement de l'actionneur de commande.

Selon une autre caractéristque, la déflexion de la bilame s'effectue dans un plan parallèle aux faces principales et selon une direction sensiblement perpendiculaire à un axe de déplacement d'un noyau plongeur des moyens de déclenchement magnétique.

Selon une autre caractéristique, les moyens de déclenchement, le mécanisme de déclenchement et l'actionneur de commande sont disposés sensiblement dans un même plan parallèle aux faces principales.

Selon une autre caractéristique, la distance entre les faces principales est sensiblement égale à un nombre de pôles dudit dispositif multiplié par une largeur polaire normalisée.

La présente invention a encore pour objet un dispositif de distribution électrique comprenant un dispositif limiteur de courant disposé en amont d'au moins un circuit de départ pourvu d'un dispositif de coupure, ce dispositif étant caractérisé en ce que ledit dispositif de coupure comporte les caractéristiques précédemment mentionnées prises seules ou en combinaison, ledit dispositif de coupure comprenant des moyens de déclenchement permettant d'ouvrir le circuit de départ lorsque le courant dans ledit circuit a été limité.

### BRÈVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.
Les figures 1A et 1B sont des vues en perspective d'un dispositif de coupure selon l'invention.
La figure 2 est une vue schématique représentant les principaux organes du dispositif de coupure.
Les figures 3A et 3B sont des vues en perspective des moyens de déclenchement thermique et magnétique.
La figure 4 est une vue en perspective représentant notamment les moyens de déclenchement, le mécanisme de déclenchement, et l'actionneur de commande dans le boitier.
La figure 5 est une vue en coupe du dispositif de coupure selon l'invention.
Les figures 6A et 6B sont des vues en perspective représentant les moyens de déclenchement, le mécanisme de déclenchement, et l'actionneur de commande.
Les figures 7A et 7B sont des vues en perspective représentant le bouton de réarmement et une partie du mécanisme de déclenchement.
La figure 8 est une vue partielle en perspective de l'unité d'actionnement.
Les figures 9A et 9B représentent le circuit électrique de commande de l'actionneur de commande selon deux modes de réalisation différents.
Les figures 10A, 10B et 10C sont des vues en perspective de l'unité d'actionnement incluant l'actionneur de commande et son socle.
Les figures 11A et 11B représentent schématiquement un bras de contact et le circuit magnétique de renforcement auquel il est associé respectivement en position de fermeture des contacts principaux et en position d'ouverture des contacts principaux.
La figure 12 représente les variations de la force de renfort exercée par un circuit magnétique de renforcement_{;} sur l'axe des ordonnées, en fonction de la distance d'ouverture des contacts principaux, sur l'axe des abscisses, et ce dans deux cas de figure, à savoir avec et sans dépassement du bras de contact par rapport au dit circuit magnétique de renforcement.
Les figures 13A, 13B et 13C sont des vues en perspective du dispositif de coupure respectivement armé, déclenché et verrouillé suite à la soudure des contacts principaux.
La figure 14 représente un dispositif de distribution comprenant un dispositif de coupure selon l'invention disposé dans un circuit de départ en aval d'un dispositif limiteur de courant.

### DESCRIPTION DETAILLEE D'UN MODE DE RÉALISATION

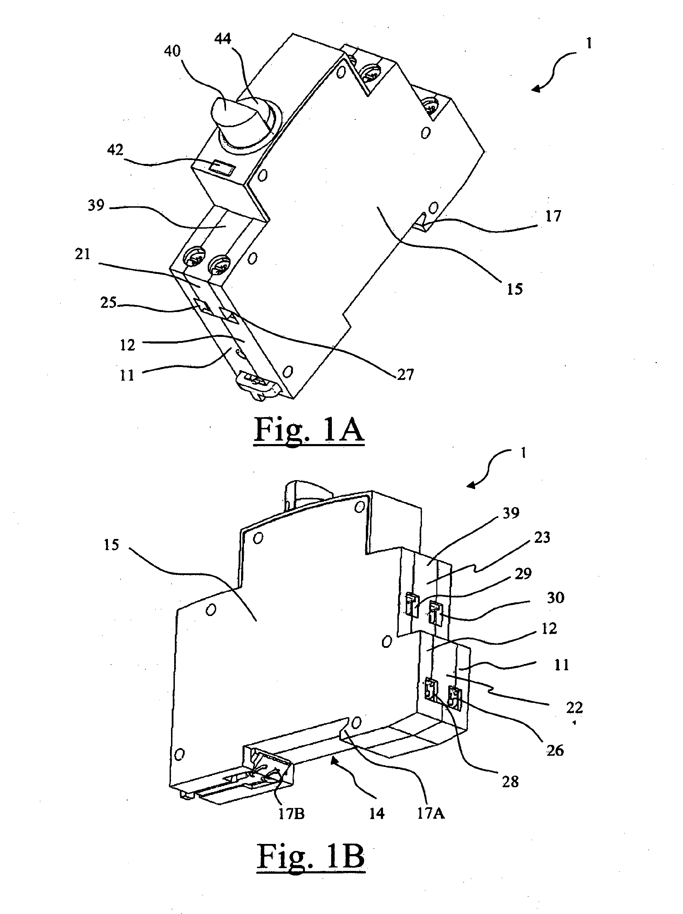

En référence aux figures 1A et 1B, le dispositif de coupure 1 est renfermé dans un boîtier pourvu de deux flasques 11 et 12, chacune d'entre elles portant des faces principales 14, 15 dudit dispositif. Il est possible de qualifier ces deux flasques respectivement de boîtier et de couvercle. Les faces principales 14, 15 sont sensiblement parallèles entre elles. Le dispositif de coupure 1 comporte une partie arrière pourvue de moyens de fixation 17A et 17B dudit dispositif sur un rail de support dans un tableau électrique. Dans un même tableau électrique, plusieurs dispositifs de coupure électrique de ce type peuvent être fixés sur un même support par l'entremise des moyens de fixation 17, les uns à côté des autres, en les accolant par leurs faces principales 14, 15.

Dans le mode de réalisation représenté, la distance entre les faces principales 14, 15 est normalisée, sensiblement égale au nombre de pôles multiplié par une distance polaire normalisée de 9 millimètres, en l'occurrence la distance entre les faces 14, 15 est sensiblement égale ou très légèrement inférieure à 18 millimètres. Les dispositifs de coupure de ce type ont un profil normalisé qui leur permet d'être fixé sur un support présentant la même normalisation. Ainsi, la distance et le profil normalisés confèrent au dispositif de coupure 1 un caractère modulaire.

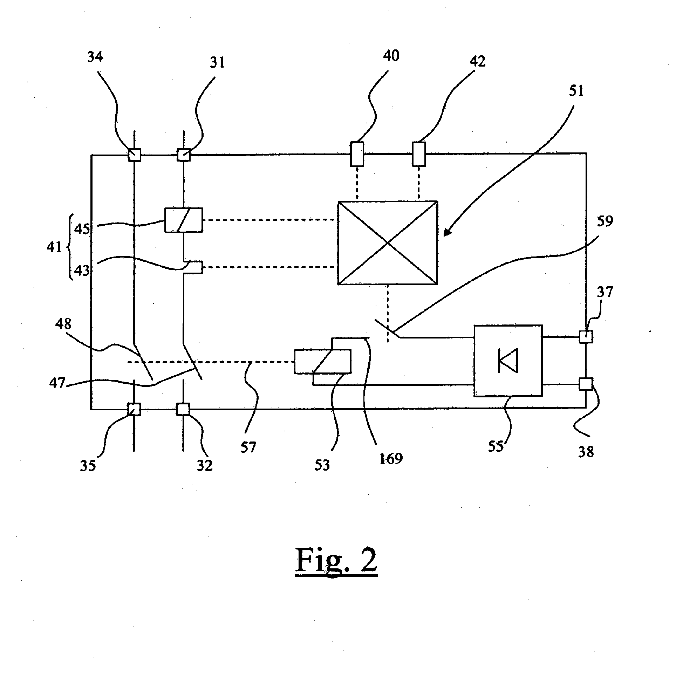

Comme cela est visible sur les figures 1A, 1B et 2, le dispositif de coupure 1 comporte des faces de connexions 21, 22, 23 pourvues d'ouvertures 25, 26, 27, 28 permettant l'accès à des bornes de raccordement. Le dispositif de coupure 1 est bipolaire et comporte une borne d'entrée de phase 31 et une borne de sortie de phase 32 d'un circuit de puissance ou de phase, ainsi qu'une borne d'entrée de neutre 34 et une borne de sortie de neutre 35 d'un circuit de neutre. Les bornes 31, 32 sont respectivement logées derrière les ouvertures 25, 26. Les bornes 34, 35 sont respectivement logées derrière les ouvertures 27, 28. Les ouvertures 25-28 d'accès à ces bornes débouchent sur les faces de connexions 21, 22 les plus éloignées du dispositif. Le dispositif est également doté de deux bornes de commande 37, 38, accessibles par des ouvertures 29, 30 débouchant sur la face de connexions 23. Le circuit de phase et le circuit de neutre sont séparés par une cloison intermédiaire 39 distincte et indépendante des deux flasques 11, 12 du boîtier et monté solidairement sur lesdits flasques. Comme cela est visible sur les figures 1A et 1B, le dispositif de coupure 1 comporte une partie frontale pourvue d'un bouton poussoir de réarment 40. Le dispositif de coupure comporte également un deuxième bouton poussoir de déclenchement manuel 42. Ces deux boutons 40 et 42 sont accessibles à l'utilisateur lorsque le dispositif de coupure est disposé dans un tableau électrique. Dans d'autres modes de réalisation non représentés, ces deux boutons pourraient être remplacés par une manette permettant d'assurer, à la fois, les deux fonctions de réarmement et de déclenchement manuel. Un voyant 44 est disposé à côté du bouton de réarmement 40 pour signaler si le dispositif de coupure est armé, auquel cas le voyant renvoie une couleur rouge, ou si le dispositif de coupure est déclenché, auquel cas le voyant renvoie une couleur verte.

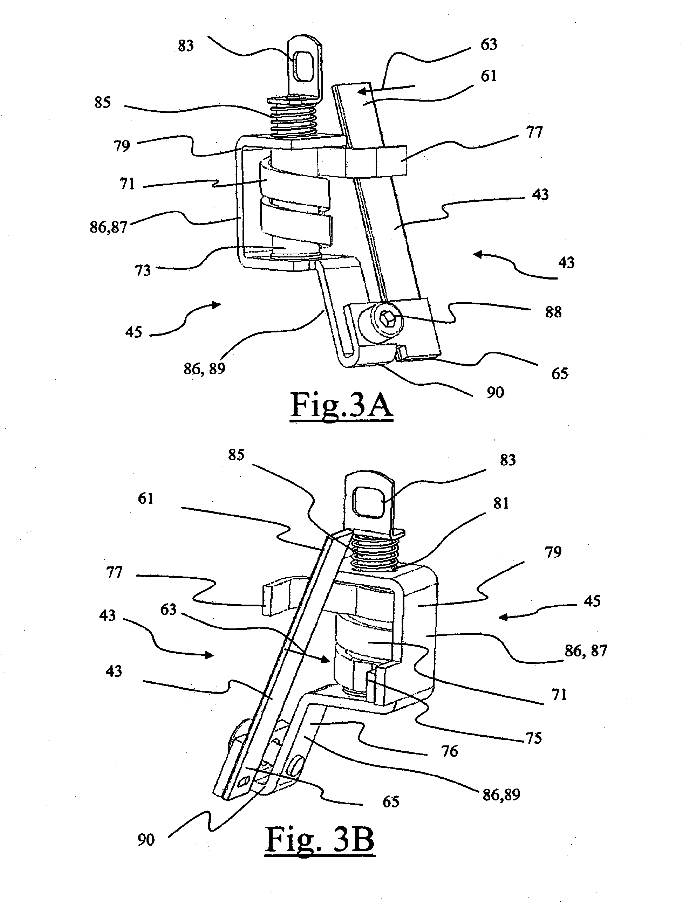

En référence à la figure 2, le circuit de phase du dispositif de coupure 1 s'étend entre la borne d'entrée de phase 31 et la borne de sortie de phase 32. Le circuit de neutre s'étend, quant à lui, entre la borne d'entrée de neutre 34 et la borne de sortie de neutre 35 d'un circuit de neutre. Le circuit de phase comporte des moyens de déclenchement 41 connectés électriquement à une borne d'entrée de phase 31 et représentés de manière plus détaillée sur la figure 3. Dans d'autres modes de réalisation, les moyens de déclenchement pourraient être connectés électriquement à la borne de sortie de phase 32. Ces moyens de déclenchement comprennent des moyens de déclenchement thermique 43 et des moyens de déclenchement magnétique 45 montés en série sur le circuit de phase. Ces moyens de déclenchement 41 agissent indirectement sur des contacts principaux mobiles 47, 48 respectivement du circuit de phase et du circuit de neutre. L'ouverture de ces contacts se fait par l'entremise d'une chaine de déclenchement comprenant un mécanisme de déclenchement 51 à déclenchement libre, un actionneur de commande 53 alimenté électriquement par des moyens redresseurs 55 et un second mécanisme 57 agissant sur les contacts mobiles 47, 48. Par mécanisme à déclenchement libre, tel qu'utilisé dans les dispositifs de coupure de l'art antérieur, on entend un mécanisme capable d'être activé indépendamment de l'organe de manoeuvre, en l'occurrence du bouton de réarmement. Ainsi, un tel mécanisme peut être déclenché et provoquer l'ouverture des contacts principaux même si le bouton de réarmement est maintenu appuyé.

Comme cela est visible sur la figure 2, le mécanisme de déclenchement 51 peut également agir par l'entremise du bouton 40 permettant le réarmement du dispositif de coupure, et du deuxième bouton 42 permettant son déclenchement manuel. Ce mécanisme de déclenchement 51 coopère avec l'actionneur de commande 53 par l'entremise d'un interrupteur interne 59, 169 au dispositif de coupure. Par interrupteur interne, on désigne tout type de moyen de commutation, qu'il soit réalisé par des composants mécaniques ou électroniques. Avantageusement, l'interrupteur interne 59, 169 comprend un contact de commande mobile 59, par exemple un pont de contact mobile ou une lame souple décrits ci-après. De cette façon, lors d'un déclenchement sur défaut électrique ou d'un déclenchement manuel à l'aide du second bouton, le contact de commande 59 s'ouvre de façon à ouvrir indirectement les contacts mobiles 47, 48. Le réarmement du dispositif de coupure se fait par l'intermédiaire du bouton de réarmement 40 qui vient fermer le contact de commande 59 autorisant une commande par application d'une tension appropriée entre les bornes 37 et 38 pour fermer les contacts mobiles 47, 48. En cas d'absence de tension entre les bornes de commande 37 et 38, les contacts mobiles restent en position ouverte.

Comme cela est visible sur la figure 2, l'entrée des moyens redresseurs 55 alimentant l'actionneur de commande 53 est connectée à une alimentation de tension alternative, non représentée, par l'entremise des deux bornes de commande 37, 38. Dans d'autres modes de réalisation non représentés, cette alimentation électrique des moyens redresseurs 55 pourrait être assurée directement à l'intérieur du dispositif de coupure grâce à une connexion avec les circuits de phase et de neutre. Dans ce cas, le dispositif de coupure ne comporterait pas de bornes de commande, et le contrôle dudit dispositif, notamment de l'actionneur de commande 53, se ferait par l'entremise d'une interface de communication associée à une électronique de commande disposée à l'intérieur dudit dispositif. Cette interface de communication peut être filaire ou non filaire, par exemple de type radio fréquence ou de type couplages en champ magnétique proches.

Le dispositif de coupure représenté à la figure 2 est particulièrement bien adapté pour être installé en aval d'un dispositif limiteur de courant. En effet, l'actionneur de commande 53 étant disposé dans la chaîne de déclenchement permet d'assurer, à la fois et de manière autonome, l'ouverture des contacts principaux en présence d'un défaut électrique, tel qu'un court-circuit ou une surcharge, et la commutation desdits contacts principaux à partir d'un ordre de commande local ou distant. Plus précisément, l'actionneur de commande 53 est disposé entre les contacts principaux mobiles 47, 48 et les moyens de déclenchement 41, de sorte que l'ouverture desdits contacts mobiles 47, 48 suite à un court-circuit ou suite à une surcharge ou encore suite à un ordre de commande se fait obligatoirement par l'entremise de cet actionneur de commande. Par rapport à un dispositif de coupure dans lequel le déclenchement se fait essentiellement par l'entremise d'un mécanisme à déclenchement libre, et éventuellement d'un percuteur disposé sur les moyens de déclenchement magnétique, le temps de réponse pour ouvrir les contacts principaux mobiles 47, 48 peut être contrôlé, voire accru. Par mécanisme à déclenchement libre, tel qu'utilisé dans les dispositifs de coupure de l'art antérieur, on entend un mécanisme capable d'être activé indépendamment de l'organe de manoeuvre, en l'occurrence du bouton de réarmement. Ainsi, un tel mécanisme peut être déclenché et provoquer l'ouverture des contacts principaux même si le bouton de réarmement est maintenu appuyé. Le montage de l'actionneur de commande 53 dans la chaîne de déclenchement du dispositif de coupure permet de contrôler et/ou de régler le retard à l'ouverture des contacts principaux mobiles 47, 48. Lorsque le dispositif de coupure est disposé en aval d'un dispositif limiteur de courants de court-circuit, le retard à l'ouverture dudit dispositif de coupure permet d'attendre que le dispositif limiteur amont ait limité, voire annulé, le courant de court-circuit avant d'ouvrir les contacts principaux mobiles 47, 48. Il en résulte que lors d'un court-circuit, les contraintes thermiques et électrodynamiques vues par les contacts principaux 47,48 sont bien plus faibles que dans les dispositifs classiques, où les contacts principaux 47,48 participent activement, en s'ouvrant tôt sur un courant élevé, à la coupure du courant de court-circuit. On comprend ainsi que, dans les conditions d'association du dispositif de coupure selon l'invention avec un dispositif limiteur amont, l'usure des contacts principaux lors d'un court-circuit soit faible, compte-tenu de leur ouverture retardée par rapport à l'apparition du pic de courant. La fonction de protection contre les courts-circuits du dispositif de coupure peut ainsi être simplifiée. Par exemple, la présence d'une chambre de coupure dans ce dispositif de coupure n'est plus obligatoire. De surcroit, l'absence de lien direct entre les contacts principaux mobiles 47, 48 et le mécanisme de déclenchement 51 permet d'obtenir une chaine de déclenchement simplifiée et plus robuste. En particulier, les contraintes de coupure ne sont pas subies par le mécanisme de déclenchement 51, contrairement aux disjoncteurs de l'art antérieur, ce qui réduit fortement les contraintes en matière de robustesse, de tenue aux chocs et de tenue aux projections chaudes, des pièces du mécanisme. Enfin, le fait que l'actionnement des contacts mobiles principaux ne puisse être réalisé que par l'intermédiaire de l'actionneur de commande, et non plus par deux mécanismes distincts, à savoir un pour la coupure de court-circuit et un pour la commutation nominale, permet de réduire la complexité du dispositif. Il n'est en effet plus nécessaire de gérer une interface mécanique complexe entre les contacts mobiles principaux d'une part, le mécanisme de déclenchement et l'actionneur de commande d'autre part. Cette simplification permet en outre d'améliorer considérablement les performances de la commutation sous courant nominal, sans affecter les performances en coupure de l'association dispositif limiteur amont et dispositif de coupure selon l'invention en aval.

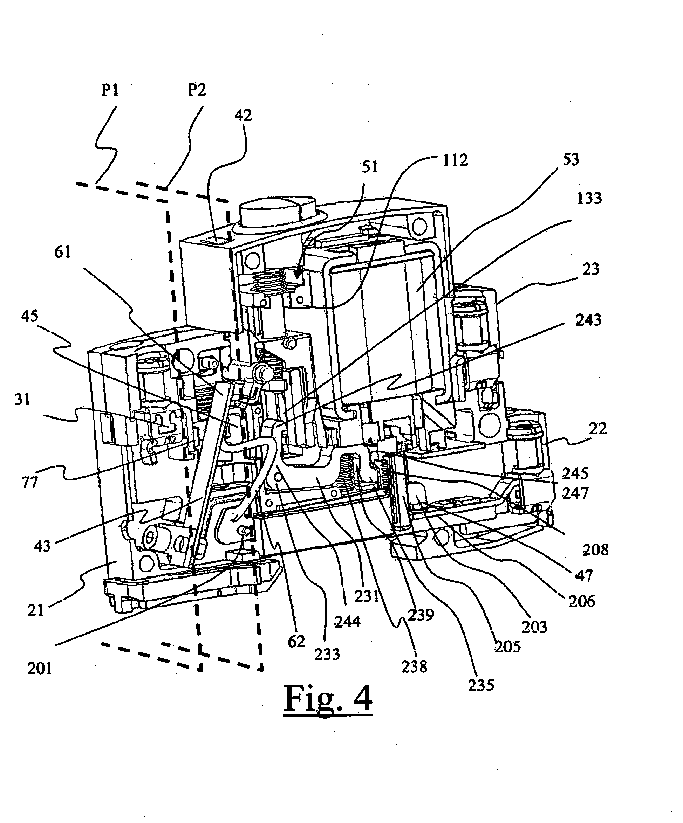

En référence aux figures 3A et 3B, les moyens de déclenchement thermique 43 sont essentiellement constitués par une bilame, c'est-à-dire par deux lames de métaux ou d'alliages différents présentant des coefficients de dilatation différents. La bilame comprend une extrémité libre 61 connectée électriquement au contact mobile 47 par l'entremise d'une tresse 62 conductrice de l'électricité (figure 4). La circulation d'un courant de surcharge dans la bilame 43 provoque un échauffement et une déflexion de cette extrémité libre 61. Cette déflexion de la bilame 43 est représentée par une flèche référencée 63. Lorsque ce courant de surcharge est supérieur à un seuil de déclenchement thermique prédéfini, cette déflexion de l'extrémité libre 61 de la bilame permet d'activer l'ouverture des contacts principaux mobiles 47, 48 du dispositif de coupure par l'intermédiaire du mécanisme de déclenchement 51. L'extrémité fixe 65 de la bilame 43 est connectée électriquement aux moyens de déclenchement magnétiques 45. Les moyens de déclenchement thermiques, c'est-à-dire essentiellement la bilame 43, permettent ainsi un déclenchement en présence de défauts électriques relativement lents et d'intensité modérée, tels que des surcharges.

Comme cela est visible sur les figures 3A et 3B, les moyens de déclenchement magnétique 45 comportent une bobine 71 entourant un noyau plongeur disposé dans le fourreau 73 qui se déplace lorsqu'un courant circule dans ladite bobine. Les moyens de déclenchement comportent également une carcasse ferromagnétique 79 permettant d'optimiser la circulation du flux magnétique généré par la circulation du courant dans la bobine. Une extrémité 75 de la bobine 71 est directement soudée sur la carcasse ferromagnétique 79 de sorte que le courant circulant dans la bobine circule également dans une partie de ladite carcasse. Cette extrémité 75 de la bobine 71 est ainsi connectée électriquement à l'extrémité fixe 65 de la bilame 43 par l'entremise d'une partie de la carcasse ferromagnétique 79 formant un support de bilame 76. De façon particulièrement avantageuse, le support de bilame 76 et la carcasse constituent une seule et même pièce monobloc, en matériau ferromagnétique. Le support de bilame remplit avantageusement deux fonctions, à savoir une fonction de support d'encastrement de la bilame 43 et une fonction de canalisation du flux magnétique produit par la bobine 71. Avantageusement, la bilame 43, le support de bilame et la bobine 71 sont ainsi montés directement en série dans la ligne de courant.

L'autre extrémité 77 de la bobine 71 est connectée à la borne d'entrée de phase 31 (figure 4). Le noyau plongeur est monté dans son fourreau 73 pour se déplacer en translation entre une position de repos et une position déployée. Le noyau plongeur traverse, d'un côté, la carcasse ferromagnétique 79 à travers une ouverture 81. Une extrémité du noyau plongeur comporte un anneau d'accrochage 83 coopérant avec le mécanisme de déclenchement pour activer l'ouverture des contacts principaux mobiles 47, 48 par l'entremise du contact de commande mobile 59, lorsque le courant circulant dans la bobine 71 dépasse un seuil de déclenchement magnétique. Un ressort de réglage 85 permet de maintenir le noyau plongeur dans la position de repos lorsque le courant dans la bobine 71 est inférieur au seuil de déclenchement. Ce ressort de réglage 85 est taré pour maintenir le noyau plongeur dans sa position de repos tant que le courant est inférieur au seuil de déclenchement magnétique. Le ressort de réglage 85 agit d'un côté sur une butée formée par l'anneau d'accrochage 83 disposé sur l'extrémité libre du noyau plongeur, et de l'autre côté sur les bords de l'ouverture 81 de la carcasse ferromagnétique 79. Les moyens de déclenchement magnétique 45 permettent ainsi un déclenchement en présence de défauts électriques rapides ou instantanés et d'intensité élevée par exemple supérieure à dix fois le courant nominal, tels que des courts-circuits francs.

Plus précisément, dans le mode de réalisation représenté sur les figures 3A et 3B, la carcasse ferromagnétique 79 des moyens de déclenchement magnétique 45 est formée dans une bande métallique pliée 86. Une première partie 87 de la bande 86 entoure la bobine 71 et permet la circulation d'un flux magnétique. Cette première partie 87 présente un profil en forme de « C ». Une deuxième partie 89 de la bande 86 est utilisée pour fixer, par soudure, l'extrémité fixe de la bilame 43. Ainsi, cette deuxième partie 89 de la bande permet, non seulement de supporter l'extrémité fixe de la bilame, mais également de faire passer le courant entre ladite bilame 43 et la bobine 61 des moyens de déclenchement magnétique 45. La structure des moyens de déclenchement s'en trouve ainsi simplifiée.

Les moyens de déclenchement thermique 43 comportent une vis de réglage 88 permettant de régler le seuil de déclenchement thermique de la bilame. De façon particulièrement avantageuse, cette vis de réglage est montée directement sur la bande métallique pliée 86, de telle sorte qu'en la vissant, on vienne resserrer un coude 90 formé vers l'extrémité fixe 65 de la bilame par la bande métallique pliée 86. De cette façon, le serrage de la vis permet de déplacer l^{,}extrémité libre de la bilame et de la rapprocher ou de l'éloigner du mécanisme de déclenchement. Un tel montage de la vis de réglage 88 directement sur le sous-ensemble de déclenchement thermique et indépendamment du boîtier de l'appareil est particulièrement avantageux car il permet d'améliorer la précision du réglage et de limiter sa dérive dans le temps.

Dans le mode de réalisation représenté sur les figures 3A et 3B, les moyens de déclenchement, incluant les moyens de déclenchement thermique 43 et les moyens de déclenchement magnétique 45, forment un même sous-ensemble indépendant pouvant être assemblé dans le dispositif de coupure en tant que bloc industriel indépendant. En d'autres termes les moyens de déclenchement thermique 43 et les moyens de déclenchement magnétique 45, forment une même unité de déclenchement du dispositif de coupure. Cette configuration sous forme de sous-ensemble ou d'unité de déclenchement amovible permet de faciliter l'assemblage du dispositif de coupure.

Comme cela est visible sur la figure 4, les moyens de déclenchement thermique 43 et magnétique 45 sont disposés côte à côte dans le boîtier dans un même plan sensiblement parallèle aux faces de connexions 21-23. En d'autres termes, les moyens de déclenchement thermique 43 et magnétique 45 sont disposés dans le boîtier de sorte qu^{,}il existe au moins un plan parallèle aux faces de connexions 21-23 coupant à la fois les moyens de déclenchement thermique 43 et les moyens de déclenchement magnétique 45.

Plus précisément, comme cela est visible sur les figures 3A, 3B et 4, l'extrémité fixe 65 de la bilame 43 est fixée à l'extrémité fixe de la bobine 71 par l'entremise de la deuxième partie 89 de la bande formant la carcasse ferromagnétique 79 des moyens de déclenchement magnétique 45. L'extrémité libre 61 de la bilame 43 est, quant à elle, disposée entre les deux extrémités 75, 77 de la bobine 71 des moyens de déclenchement magnétique. En d'autres termes, la bilame s'étend entre deux plans P1, P2 parallèles aux faces de connexions 21-23 dans les limites des moyens de déclenchement magnétiques. En outre, la déflexion de la bilame 43 s'effectue dans un plan parallèle et selon une direction sensiblement perpendiculaire au déplacement du noyau plongeur. Par cet agencement, l'encombrement des moyens de déclenchement 41 dans un plan parallèle aux faces principales 14, 15 du dispositif de coupure s'en trouve limité. Cet agencement des moyens de déclenchement 43, 45 permet de réduire considérablement leur encombrement dans le boîtier. Cet agencement permet également de positionner, sensiblement dans un même plan parallèle aux faces principales 14,15 du dispositif de coupure, les moyens de déclenchement 43, 45, le mécanisme de déclenchement 51 et l^{,}actionneur de commande 53. On limite ainsi l'encombrement du dispositif de coupure selon un plan perpendiculaire aux faces principales 14, 15, ce qui permet de respecter la distance de 18 mm entre lesdites faces principales. Il est à noter que la déflexion de la bilame 43 s'effectue également dans un plan parallèle aux faces principales 14, 15 et selon une direction sensiblement perpendiculaire à un axe de déplacement du noyau plongeur 73 des moyens de déclenchement magnétique 45.

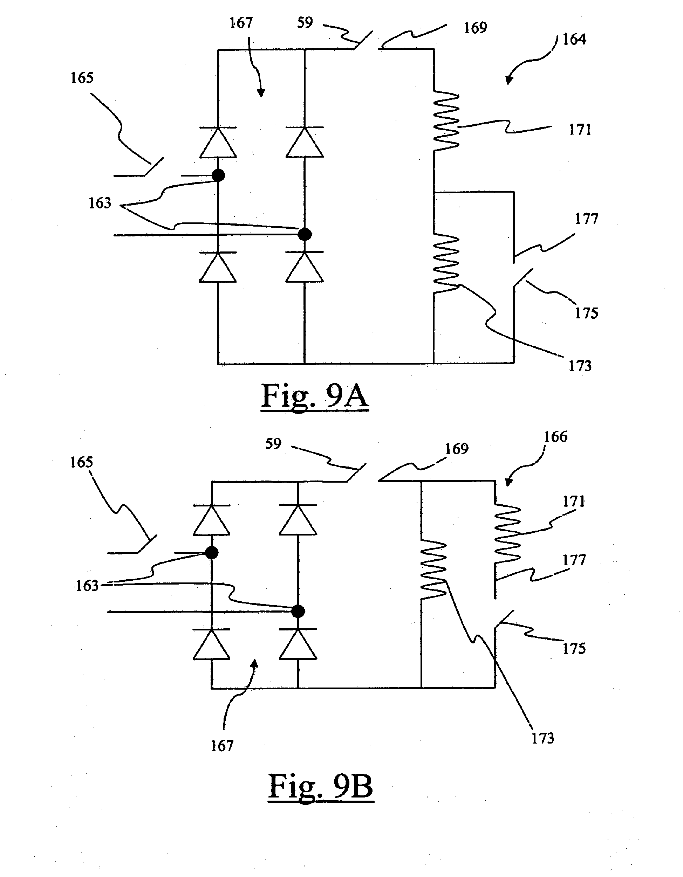

Cet agencement compact des moyens de déclenchement 41 a été rendu possible du fait que le mécanisme de déclenchement 51 associé aux dits moyens de déclenchement agit principalement en translation selon une direction d'actionnement dudit mécanisme de déclenchement 51 sensiblement parallèle à une direction d'actionnement de l'actionneur de commande 53. Le mécanisme de déclenchement 51 peut donc être disposé à côté de l'actionneur de commande 53, de manière à agir directement sur l'interrupteur interne comprenant le contact de commande mobile 59 et un contact de commande fixe 169, représenté sur les figure 9A et 9B, sur lequel le contact de commande mobile 59 peut venir se fermer, ledit contact de commande fixe 169 étant porté par un socle 159 dudit actionneur de commande.

Avantageusement, le mécanisme de déclenchement 51, les moyens de déclenchement 41 et l'actionneur de commande 53 sont montés sur la cloison intermédiaire 39 séparant physiquement le circuit de phase du circuit de neutre, et constituant une unité amovible, indépendante des flasques 11, 12 du boîtier. Ceci rend particulièrement plus aisé l'assemblage du produit, puisqu'une fois le mécanisme de déclenchement 51, les moyens de déclenchement 41 et l'actionneur de commande 53 montés sur la cloison intermédiaire 39, il ne reste plus qu'à refermer les deux flasques 11, 12 du boîtier de part et d'autre de ladite cloison.

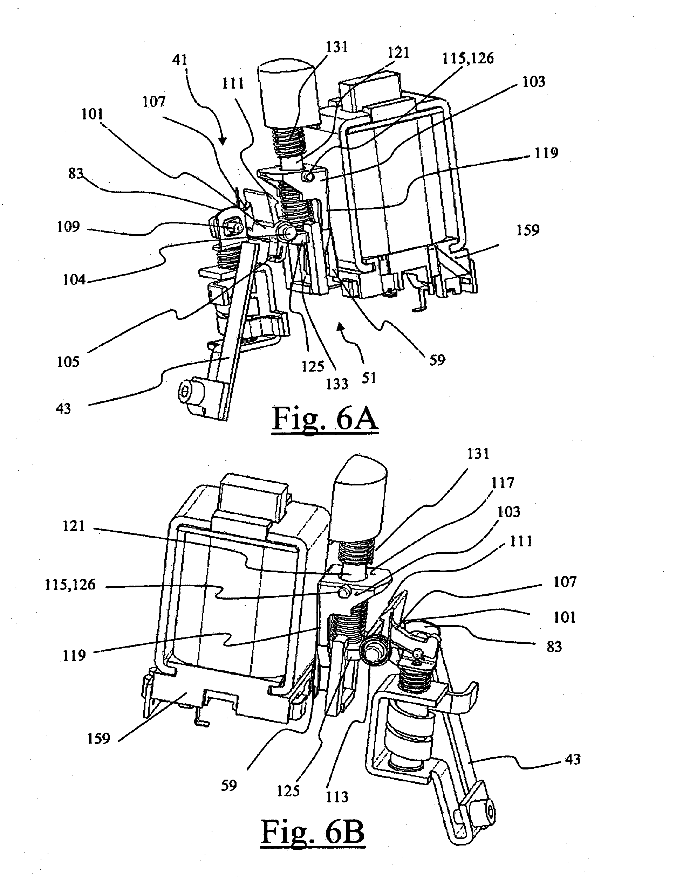

En référence aux figures 6A et 6B, le mécanisme de déclenchement 51 comprend, entre les moyens de déclenchement 41 et l'interrupteur interne 59, 169, un verrou 101 agissant sur un levier de contact 103. Selon une première variante de réalisation représentée sur les figures 6A et 6B, le levier de contact 103 porte le contact de commande mobile 59. Le verrou 101 est monté rotatif autour d'un axe 104 coopérant avec un logement ménagé dans la cloison intermédiaire 39 et comprend un premier bras d'actionnement 105 qui est entraîné par la déflexion de la bilame 43. Le verrou 101 comprend un second bras d'actionnement 107 qui est, quant à lui, entraîné par les moyens de déclenchement magnétique 45. Le second bras d'actionnement 107 est également entraîné par le bouton de déclenchement manuel 42, ou plus exactement par une tige solidaire dudit bouton. L'extrémité libre du deuxième bras d'actionnement comporte un ergot latéral 109 qui est inséré dans l'anneau d'accrochage 83 du noyau plongeur des moyens de déclenchement magnétique 45. Selon une autre variante de réalisation, non représentée, la tige peut venir directement appuyer sur l'anneau d'accrochage 83 du noyau plongeur et c'est l'anneau d'accrochage du noyau plongeur qui vient ensuite entraîner le deuxième bras d'actionnement par le biais de l'ergot latéral. Le verrou 101 comporte également un crochet 111 destiné à accrocher le levier de contact 103 et à le maintenir dans une position verrouillée ou armée, dans laquelle le contact de commande mobile 59 et les contacts principaux 47, 48 sont fermés. Un ressort de maintien 113 disposé entre le second bras d'actionnement 107 et le boitier permet de maintenir le verrou 101 dans sa position de verrouillage.

Le levier de contact 103 est, quant à lui, monté basculant autour d'un axe de basculement 115 matérialisé par des ergots 126, lesdits ergots étant montés coulissants dans des rainures du boîtier non représentés. Dans le mode de réalisation représenté, le levier de contact 103 à la forme d'une équerre. D'un côté par rapport à l'axe 115, le levier de contact 103 comporte un bras d'accrochage 117 permettant un accrochage avec le crochet 111 du verrou 101 pour maintenir ledit levier verrouillé ou armé. De l'autre côté par rapport à l'axe 115, le levier de contact 103 comporte un bras d'entraînement 119 sur lequel est disposé le contact de commande mobile 59. Selon une autre variante de réalisation, non représentée, le contact de commande mobile 59 est formé par une lame souple élastique comportant une extrémité fixe, montée sur le socle de l'actionneur de commande, et une extrémité libre qui vient se fermer sur le contact de commande fixe 169 lorsque, le mécanisme de déclenchement étant en position armée, le bras d'entraînement 119 vient en appui sur la lame souple élastique. Lorsque le levier de contact 103 est verrouillé ou armé par l'entremise du verrou 101, l'interrupteur interne 59, 169 est fermé.

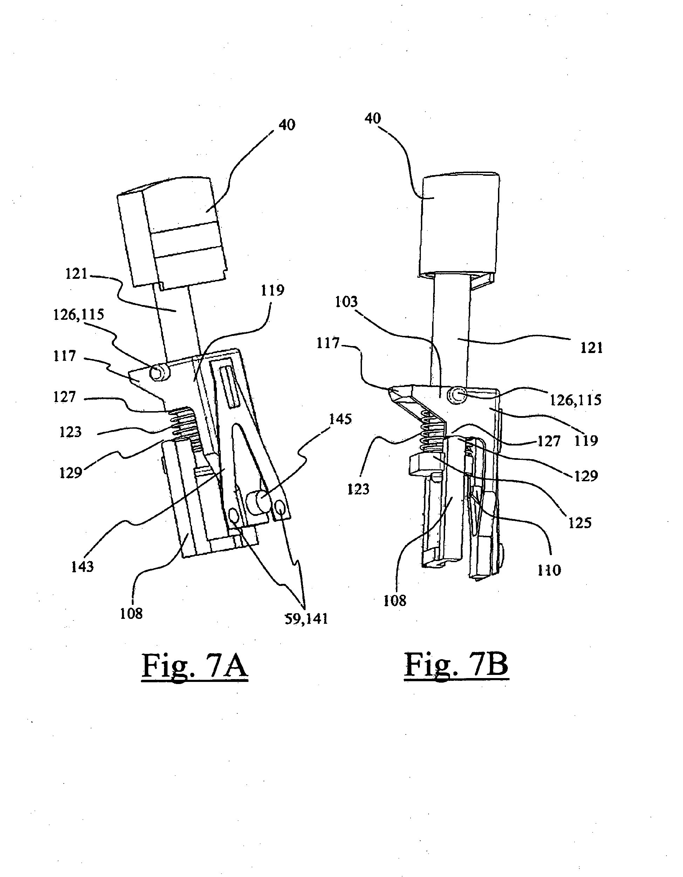

Comme cela est visible sur les figures 7A et 7B, le mécanisme de déclenchement 51 comprend, en outre, une tige d'entrainement 121 solidaire, à l'une de ses extrémités, du bouton de réarmement 40. Cette tige d'entraînement 121 permet de déplacer en translation le levier de contact 103 entre une position haute et une position basse en appuyant sur le bouton de réarmement 40 ou en relâchant ledit bouton. La tige d'entraînement 121 est donc montée coulissante sur des glissières du boîtier non représentées. Plus précisément, la tige d'entraînement 121 est solidaire, à l'autre de ses extrémités, d'un oeillet d'accrochage 133, dont la fonction d'accrochage est décrite plus loin. Les parties latérales de cet oeillet d'accrochage 133 forment des coulisseaux 108 coulissant dans les mêmes rainures du boîtier dans lesquelles sont engagés les ergots 126 du levier de contact 103. La tige d'entraînement 121 comporte des butées 129 ménagées sur la partie supérieure des coulisseaux 108 destinés à venir s'appuyer sur des butoirs 127 du levier de contact 103. Un ressort de rappel 131 représenté sur les figures 6A et 6B, est disposé entre un point fixe du boîtier (figure 4) et le bouton de réarmement 40 pour rappeler la tige d'entraînement 121 et ledit bouton solidaire de ladite tige en position haute, lorsque le levier de contact 103 est déverrouillé. Lorsque le levier de contact 103 est verrouillé par le verrou 101, le ressort de rappel 131 permet également de rappeler la tige d'entraînement 121 vers la position haute, en faisant basculer le levier de contact 103 dans une position de fermeture du contact de commande 59. Dans ce dernier cas, les butées 129 ménagées sur les coulisseaux 108 de la tige d'entraînement 121 viennent s'appuyer contre les butoirs 127 du levier de contact 103, ce qui permet de basculer ledit levier dans sa position de verrouillage dans laquelle le contact de commande mobile 59 est dans sa position de fermeture. Ainsi, le basculement du contact de commande mobile 59 dans sa position de fermeture est obtenu grâce à la pression exercée par le verrou 101 sur le bras d'accrochage 117 du levier de contact 103 et par la pression inverse des butées 129 sur les butoirs 127 exercé au moyen du ressort 131. L'oeillet d'accrochage 133 décrit précédemment est fixé à l'extrémité de la tige d'entraînement 121 au moyen d'une pièce d'accrochage 125. Cette pièce d'accrochage 125 permet non seulement de solidariser l'oeillet d'accrochage 133 à la tige d'entraînement 121, mais permet également d'accrocher un ergot 110 solidaire du bras d'entraînement 119 du levier de contact 103. L'ergot 110 est disposé de façon à permettre son accrochage par la pièce d'accrochage 125 lorsque le levier de contact 103 est basculé dans sa position déverrouillée. Un plan incliné 112 solidaire du boîtier coopère avec la partie supérieure du levier de contact 103 pour faire basculer ledit levier dans sa position de déverrouillage, lorsque le bouton de réarmement 40 et la tige d'entraînement 121 solidaire dudit bouton sont en position haute. Ainsi, en appuyant sur le bouton de réarmement 40, le levier de contact 103 et le contact de commande 59 solidaire dudit levier de contact sont entraînés en position basse, en maintenant ledit levier de contact basculé dans sa position de déverrouillage. Lorsque le levier de contact 103 et la tige d'entraînement 121 sont en position basse, le bras d'accrochage 117 a dépassé le crochet 111 du verrou 101. Après relâchement du bouton 40, le levier de contact 103 est entraîné vers la position haute au moyen du ressort de rappel 131, jusqu'à ce que le bras d'accrochage 117 vienne s'accrocher au crochet 111. Il s'ensuit que l'ergot 110 **s**olidaire du levier de contact 103 se désengage de la pièce d'accrochage 125 et la tige d'entraînement 121 remonte pour se placer dans sa position intermédiaire dans laquelle les butées 129 ménagées sur les coulisseaux 108 viennent s'appuyer contre les butoirs 127 du levier de contact 103.

Le mécanisme de déclenchement 51 décrit ci-dessus opère de la façon suivante. Lors d'un déclenchement suite à une surcharge électrique, c'est-à-dire un déclenchement de type thermique, l'extrémité libre 61 de la bilame 43 vient appuyer sur le premier bras d'actionnement 105 et contrer l'effort du ressort 113 pour entrainer le verrou 101 en rotation. De la même façon, lors d'un déclenchement suite à un court-circuit, c'est-à-dire un déclenchement de type magnétique, le noyau plongeur des moyens de déclenchement magnétique 45 déplace le second bras d'actionnement 107 par l'entremise de l'anneau d'accrochage 83 et de l'ergot 109, en contrant l'effort du ressort 113 pour entrainer le verrou 101 en rotation. De la même façon encore, en appuyant sur le bouton de déclenchement manuel 42, le second bras d'actionnement 107 se déplace, par l'entremise de la tige, en contrant l'effort du ressort 113 pour entrainer le verrou 101 en rotation. Dans les trois cas, la rotation du verrou 101 entraîne le crochet 111 dans une position permettant de libérer le levier de contact 103. Il s'ensuit que le levier de contact 103 est basculé en position de déverrouillage en entraînant le déplacement du contact de commande 59 dans sa position d'ouverture. En même temps, le levier de contact 103 est déplacé en translation vers sa position haute aux moyens de la tige d'entrainement 121 et du ressort de rappel 131. Lorsque le défaut électrique à l'origine du déclenchement a été isolé, par ouverture des contacts principaux 47, 48, le noyau plongeur ou la bilame, ainsi que le verrou 101 retrouvent une position initiale. Cette position initiale peut permettre le verrouillage du levier de contact 103 à la suite d'un réarmement du levier de contacts 103. Le réarmement se fait en appuyant sur le bouton 40 de réarmement afin d'entrainer en translation le levier de contact 103 en position basse. Au début du réarmement, le plan incliné 112 solidaire du boîtier permet de maintenir le levier de contact 103 dans sa position de déverrouillage. Dans cette position inclinée du levier de contact 103, l'ergot 110 du bras d'entraînement 119 peut être accroché par la pièce d'accrochage 125 solidaire de la tige d'entraînement 121. En appuyant sur le bouton de réarmement 40, le levier de contact 103 et le contact de commande 59 solidaire dudit levier de contact sont donc entraînés en position basse. Après relâchement du bouton 40, le levier de contact 103 est entraîné vers la position haute au moyen du ressort de rappel 131, jusqu'à ce que le bras d'accrochage 117 vienne s'accrocher au crochet 111 1 du verrou 101. Le levier de contact 103 est alors basculé dans une position qui ferme le contact de commande mobile 59 grâce à la contrainte exercée par le crochet 111 et par les butées 129 sur le levier de contact 103.

Comme cela est visible sur la figure 7A, le contact de commande mobile 59 se présente, selon la première variante de réalisation précédemment décrite, sous la forme d'un pont de contacts présentant deux pastilles de contact 141 montées sur une lame ressort 143. Entre les deux pastilles de contact 141, le levier de contact 103 comporte une butée 145 s'appuyant sur un butoir de l'actionneur de commande 53 décrit dans ce qui suit.

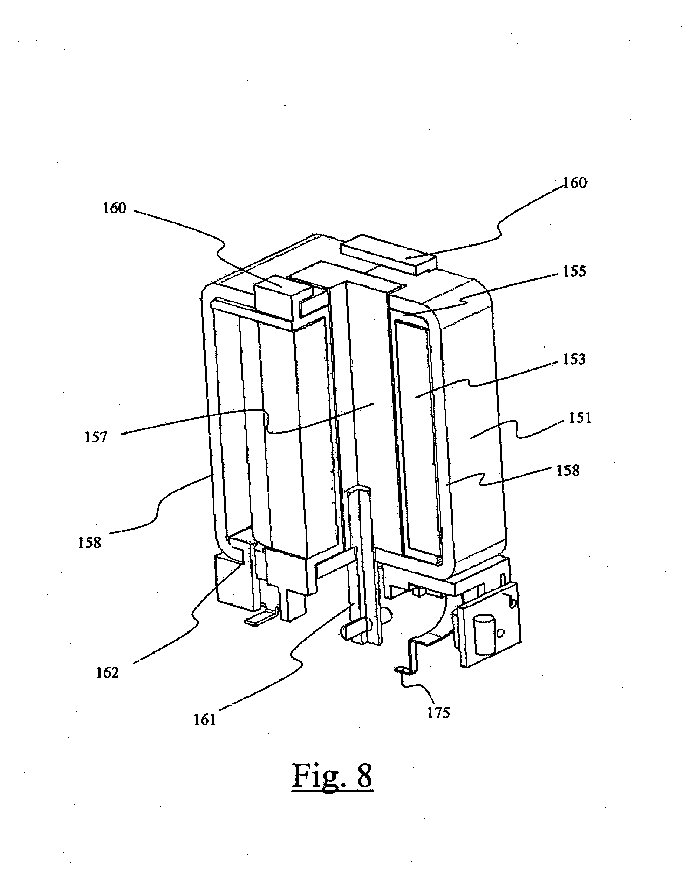

En référence à la figure 8, l'actionneur de commande 53 est un électro-aimant comprenant essentiellement une carcasse ferromagnétique 151, une bobine 153 enroulée autour d'un support de bobine 155 en matériau isolant et un noyau plongeur 157 coulissant à l'intérieur dudit support de bobine. La carcasse ferromagnétique 151 est formée par deux bandes pliées 158 présentant chacune deux branches et ayant un profil en forme de « U ». Lors du montage de l'actionneur de commande 53, les extrémités des deux branches de chaque bandes pliées 158 sont fixées entre elles, sur une grande partie de leur largeur, pour assurer la circulation d'un flux magnétique. Plus précisément, les extrémités des bandes pliées 158 sont engagées dans des fourreaux 160, 162 formés dans le socle 159 de l'actionneur de commande et dans le support de bobine 155. L'actionneur 53 et son socle 159 forment ainsi une unité d'actionnement amovible pouvant être montée séparément avant d'être incorporée dans le dispositif de coupure, notamment sur la cloison intermédiaire 39. Cet agencement permet de faciliter l'assemblage du dispositif de coupure. Le noyau plongeur 157 comporte une extension ou réglette 161 destinée à entraîner les contacts principaux mobiles 47, 48. Lorsque qu'un courant d'excitation circule dans la bobine 153, le noyau plongeur 157 et la réglette 161 sont déployés pour maintenir les contacts principaux mobiles 47, 48 dans une position de fermeture. Lorsqu'aucun courant circule dans la bobine 153, le noyau plongeur 157 et la réglette 161 sont rétractés pour maintenir les contacts principaux mobiles 47, 48 dans une position d'ouverture. Ainsi, l'actionneur de commande 53 est du type monostable, c'est-à-dire qu'il ne comporte qu'une seule position stable lorsqu'il n'est plus alimenté. Cette position stable de l'actionneur correspond à une position d'ouverture des contacts principaux 47, 48, ce qui permet d'assurer un fonctionnement sécuritaire. En cas de perte d'alimentation de l'actionneur de commande 53, ce dernier revient spontanément vers sa position stable d'ouverture.

En référence aux figures 9A et 9B, des circuits de commande de l'actionneur de commande 53, référencés respectivement 164, 166, comportent deux bornes d'alimentation 163 en courant alternatif. Ces bornes correspondent aux bornes de commande 37, 38 visibles sur la figure 2. Dans le mode de réalisation représenté, l'actionneur de commande 53 est alimenté par une alimentation électrique externe connectée sur les bornes d'alimentation 163 via un interrupteur de télécommande 165. Dans d'autres modes de réalisation, non représentés, l'alimentation électrique pourrait être obtenue par des connexions dans le boîtier avec le circuit de phase et le circuit de neutre, à l'intérieur du dispositif de coupure, auquel cas, le dispositif de coupure comporterait une interface de communication à la place des bornes d'alimentation 163.

Les circuits de commande 164, 166 représentés sur les figures 9A et 9B comportent, en outre des moyens redresseurs 167, en l'occurrence un pont de diodes, connecté aux bornes d'alimentation 163. Les moyens redresseurs permettent de transformer la tension alternative sur les bornes d'alimentation 163 en tension redressée. Dans d'autres modes de réalisation, non représentés, les moyens redresseurs pourraient être disposés à l'extérieur du dispositif de coupure, ou rendus inexistants si la tension de commande est de nature continue ou unidirectionnelle.

Les circuits de commande 164, 166 représentés sur les figures 9A et 9B comprennent, en outre, le contact de commande mobile 59 décrit précédemment, ainsi que le contact de commande fixe 169 sur lequel le contact de commande mobile 59 peut venir se fermer. La bobine 153 est connectée au contact de commande fixe 169 et comprend une première bobine d'appel 171 et une deuxième bobine de maintien 173. La première bobine d'appel 171 est dédiée au déplacement du noyau plongeur 157 entre sa position rétractée et sa position déployée. La seconde bobine de maintien 173 est, quant à elle, dédiée au maintien du noyau plongeur 157 dans sa position déployée, dans laquelle les contacts principaux sont fermés. Le circuit de commande comprend également un contact mobile de fin de course 175 permettant de limiter l'échauffement des bobinages en réduisant la consommation, lorsque les contacts principaux mobiles sont maintenus fermés. Plus précisément, le contact mobile de fin de course 175 visible sur la figure 8 est entraîné par la réglette 161 de façon à s'éloigner d'un contact fixe de fin de course 177 du circuit de commande 164, 166 lorsque ledit noyau plongeur est dans une position complètement déployée correspondant à la fermeture des contacts principaux. Le contact de fin de course 177 est agencé dans le circuit de commande 164, 166 pour limiter le courant d'excitation circulant dans l'une ou les deux bobines 171, 173 lors de l'ouverture du contact mobile de fin de course 175.

La première bobine d'appel 171 présente des dimensions plus petites par rapport à la seconde bobine de maintien 173, et présente une impédance plus faible. La seconde bobine de maintien 173 est, quant à elle, dimensionnée pour permettre le stockage de l'énergie nécessaire au maintien des contacts principaux mobiles 47, 48 fermés. La seconde bobine de maintien 173 présente une résistance élevée afin de minimiser le courant d'excitation et de limiter la consommation d'énergie pendant le maintien des contacts principaux fermés. Ce courant d'excitation est suffisamment faible, pour que l'arc électrique généré lors de l'ouverture du contact de commande mobile 59, suite à un déclenchement manuel ou sur défaut électrique, soit très peu énergétique. Ceci facilite et accélère l'extinction naturelle du courant en minimisant l'endommagement et l'usure du contact mobile 59.

Dans le mode de réalisation de la figure 9A, la première bobine d'appel 171 et la seconde bobine de maintien 173 sont connectées en série et les contacts de fin de course 175, 177 sont montés en parallèle avec la seconde bobine de maintien 173. Lorsque le noyau plongeur 157 est dans sa position déployée, correspondant à la fermeture des contacts principaux, les contacts de fin de course 175, 177 sont ouverts et le courant d'excitation parcours les deux bobines 171, 173. Ce courant d'excitation est donc limité par la seconde bobine de maintien 173 qui présente une impédance élevée.

Dans le mode de réalisation de la figure 9B, la première bobine d'appel 171 et la seconde bobine de maintien 173 sont connectées en parallèle et les contacts de fin de course 175, 177 sont montés en série avec la première bobine d'appel 171. Lorsque le noyau plongeur 157 est dans sa position déployée, correspondant à la fermeture des contacts principaux, les contacts de fin de course 175, 177 sont ouverts et le courant d'excitation parcours uniquement la seconde bobine de maintien 173. Ce courant d'excitation est donc limité par la seconde bobine de maintien 173 qui présente une impédance élevée.

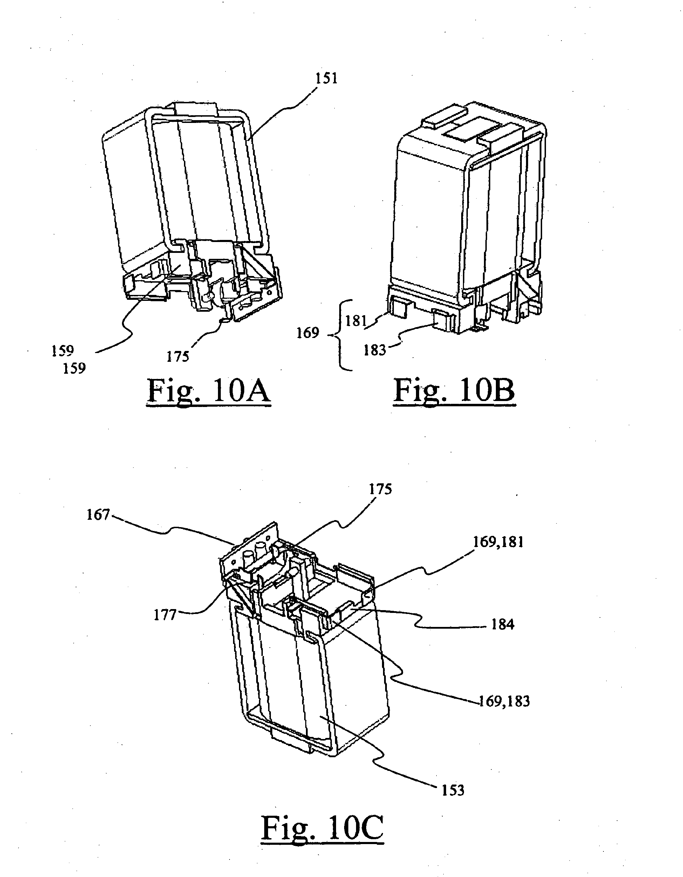

Comme cela est visible sur les figures 10A, 10B et 10C, le contact de commande fixe 169 est disposé sur le socle 159. Plus précisément, le contact de commande fixe 169 présente deux lames ou zones de contact 181, 183 sur lesquelles les pastilles 141 du contact de commande mobile 59 viennent s'appuyer lors d'un fonctionnement normal, c'est-à-dire mécanisme de déclenchement armé, sans défaut électrique. Un butoir 184 est disposé entre les deux lames de contact 181, 183 contre lequel vient s'appuyer la butée 145 du levier de contact 103 portant le contact de commande mobile 59. Dans la deuxième variante de réalisation du contact de commande mobile 59 non représentée, à savoir la lame souple élastique, le contact de commande fixe présente une seule zone de contact sur laquelle la pastille du contact de commande mobile, montée sur la lame souple, vient s'appuyer. Le contact fixe de fin de course 177 est, quant à lui, également disposé sur le socle 159. En ce qui concerne le contact mobile de fin de course 175, il est couplé avec le noyau plongeur 157. Cet agencement, dans lequel le contact de commande mobile 59 et les contacts de fins de course 175, 177 sont disposés sur l'unité d'actionnement permet de faciliter le montage du dispositif de coupure. Dans le mode de réalisation représenté, les moyens redresseurs 167 sont également directement disposés sur le socle 159 de l'unité d'actionnement. L'assemblage du dispositif de coupure s'en trouve ainsi encore plus facilité. L'actionneur de commande 53 décrit ci-dessus opère de la façon suivante. La commande d'ouverture ou de fermeture des contacts principaux mobiles 47, 48 se fait par l'entremise de l'interrupteur de télécommande 165, externe au dispositif de coupure. Lorsque l'interrupteur de télécommande 165 est fermé, l'actionneur de commande 53 est alimenté et les contacts principaux mobiles 47, 48 sont maintenus fermés par l'entremise du noyau plongeur 157 et de la réglette 161 qui sont en position déployée. Lorsque l'interrupteur de télécommande 165 est ouvert, l'actionneur n'est plus alimenté et les contacts principaux mobiles 47, 48 sont maintenus ouverts par l'entremise du noyau plongeur 157 et de la réglette 161 qui sont en position rétractée. Dans ce dernier cas, l'interrupteur de télécommande 165 étant disposé en amont des moyens redresseurs 167, le courant circulant dans la bobine ne s'annule pas instantanément mais décroit progressivement en cheminant par les moyens redresseurs 167. La très faible consommation de l'actionneur permet la décroissance progressive du courant. C'est seulement lorsque le courant atteint la valeur du courant de retombé que le noyau plongeur 157 se déplace dans sa position rétractée. Le niveau du courant de retombé est très faible en raison du nombre très important de spires de la bobine de maintien. Ceci permet avantageusement et sans autre réserve d'énergie d'origine électrique, par exemple de type capacité, d'avoir une meilleure tenue du dispositif aux coupures d'alimentation de courte durée, c'est-à-dire des coupures de l'ordre de quelques dizaines de millisecondes. Ainsi, en cas de chute de tension de courte durée en amont des moyens redresseurs 157, l'actionneur de commande 53 ne passe pas instantanément dans sa position d'ouverture stable, mais reste en position de fermeture, en garantissant ainsi le maintien des contacts principaux en position fermée.

Dans le cas où le dispositif de coupure est disposé dans un circuit de départ en aval d'un dispositif limiteur de courant, le circuit de commande de l'actionneur de commande 53 permet d'obtenir une bonne tenue aux coupures de courte durée, de l'ordre de quelques dizaines de millisecondes, qui pourraient être occasionnées par un court-circuit en aval d'un autre dispositif de coupure. Cette tenue aux coupures de courte-durée permet donc d'améliorer la continuité de service sur les départs non concernés par le défaut. L'ouverture des contacts principaux mobiles 47, 48 à la suite d'un défaut électrique ou la fermeture desdits contacts principaux après un réarmement se font par l'entremise du contact de commande mobile 59. Le contact de commande mobile 59 étant disposé en aval des moyens redresseurs 167, l'ouverture des contacts principaux 47, 48 à la suite d'un défaut électrique est plus rapide par rapport à une ouverture desdits contacts par l'entremise de l'interrupteur de télécommande 165. Le temps d'ouverture des contacts principaux est alors inférieur à 20 ms, par exemple compris entre 6 et 15 millisecondes, entre l'instant d'apparition du défaut et l'ouverture effective des contacts principaux. Ce mode de fonctionnement sur défaut est destiné à assurer une ouverture suffisamment rapide des contacts principaux pour les courants de court-circuit faibles à modérés, typiquement inférieurs à trente fois le courant nominal, pour lesquels le dispositif limiteur amont n'est pas activé et le dispositif de coupure doit interrompre seul le courant de défaut.

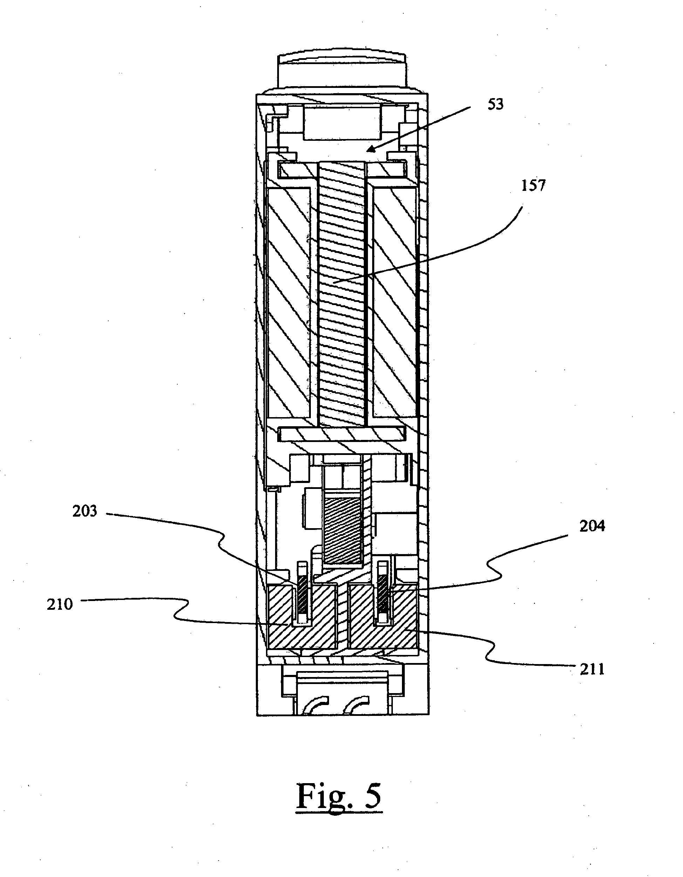

Comme cela est visible sur les figures 4 et 5, les contacts principaux mobiles 47, 48 sont disposés respectivement sur deux bras de contacts mobiles 203, 204 montés pivotants autour d'un axe 201 sur une première extrémité desdits bras. Les bras de contact 203, 204 présentent la forme d'une lame présentant deux faces principales montées sensiblement parallèlement aux faces principales 14, 15 du boîtier. Les contacts principaux mobiles 47, 48 sont fixés sur la tranche ou l'épaisseur des bras de contacts 203, 204, et sur leur dimension principale, vers une seconde extrémité desdits bras de contact. Les bras de contact 203, 204 sont couplés à la réglette 161 du noyau plongeur 157 par l'entremise d'un étrier ou porte-contacts 205 dans lequel lesdits bras sont engagés. L'étrier 205 est lui-même monté solidairement à l'extrémité de la réglette 161. Un ressort de pression de contact 208, agissant sur chaque bras de contact 203, 204 permet de maintenir une pression suffisante entre les contacts mobiles principaux 47, 48 et leurs contacts principaux fixes 206, 207 respectifs. Plus précisément, ce ressort de pression de contact 208 est disposé entre un élément de l'étrier 205 et l'extrémité des bras de contact 203, 204 portant les contacts principaux mobiles 47, 48. Lorsque le noyau plongeur 157 est déployé, le ressort de pression de contact 208 permet ainsi de maintenir une force de pression entre les contacts principaux 47, 48, 206, 207.

Dans le mode de réalisation représenté sur les figures 4 et 5, le déplacement des contacts principaux mobiles 47, 48 à la suite d'un déclenchement sur défaut électrique ou à la suite d'un ordre de commande d'ouverture ou de fermeture se fait par l'entremise du même actionneur de commande 53 et selon un axe sensiblement confondu avec la direction d'actionnement dudit actionneur, c'est-à-dire l'axe de déplacement de son noyau plongeur 157. De surcroît, cette direction d'actionnement est perpendiculaire à la face avant du dispositif de coupure et s'étend parallèlement au mécanisme de déclenchement 51 ce qui permet d'accroître la compacité du dispositif de coupure.

Dans le mode de réalisation représenté sur les figures 4 et 5, le mécanisme de déclenchement 51 fonctionne selon un axe de translation sensiblement parallèle à un axe d'actionnement de l'actionneur de commande 53. En d'autres termes l'axe de déplacement de la tige d'entraînement 121 et du levier de contact 103 du mécanisme de déclenchement 51 est sensiblement parallèle avec l'axe de déplacement du noyau plongeur 157 de l'actionneur de commande 53.

Les bras de contacts mobiles 203, 204 sont dans un matériau conducteur de l'électricité. Un circuit magnétique de renforcement 210, 211 coopérant directement avec chaque bras de contact mobile 203, 204 permet de renforcer la force de pression entre les contacts principaux 47, 48, 206, 207, notamment lorsque le courant circulant dans les bras de contacts mobiles 203, 204 est largement supérieur au courant nominal du dispositif, par exemple lors de la circulation d'un courant de court-circuit supérieur, voire largement supérieur, au seuil de déclenchement magnétique, par exemple dix fois supérieur. Plus précisément, chaque circuit magnétique de renforcement 210, 211 présente essentiellement un élément en matériau ferromagnétique ayant une section en forme de « U » (figure 5), ledit élément étant monté solidairement dans le boîtier et entourant en partie chaque bras de contact 203, 204. De façon particulièrement avantageuse, le circuit magnétique de renforcement est ouvert, c'est-à-dire que l'entrefer actif, responsable de la force de renfort est formé par la distance dans l'air entre les deux branches du U. Ceci diffère notamment de circuits magnétiques dits fermés, pour lesquels un autre organe ferromagnétique, généralement mobile, vient fermer le circuit magnétique de manière à réduire l'entrefer. Les bras de contact 203, 204 sont avantageusement en matériau non ferromagnétique, par exemple du cuivre ou du laiton de manière à ne pas modifier l'entrefer actif lors de leur mouvement. Les circuits magnétiques de renforcement 210, 211 sont donc fixes par rapport aux contacts principaux fixes 206, 207. Chaque bras de contact 203, 204 comporte deux faces latérales sensiblement parallèles aux faces des branches du profil en U des circuits magnétiques de renfort 210, 211 ou aux bords desdits circuits magnétiques de renfort, de sorte que le flux magnétique circulant dans le profil en forme de U desdits circuits magnétiques de renfort 210, 211 traverse ledit bras de contact par ses faces latérales. Cette disposition, sur la tranche, du bras de contact mobile par rapport au profil en U permet de minimiser l'entrefer du circuit magnétique de renfort et de maximiser la force d'origine magnétique.

Dans le mode de réalisation représenté, les bras de contacts mobiles 203, 204 est monté pivotant. Dans d'autres modes de réalisation non représentés, les bras de contacts mobiles pourraient être mobiles en translation.

Les circuits magnétiques de renforcement 210, 211 sont de préférence dans un alliage comportant du fer et du silicium, par exemple 2 % de silicium. Une telle composition permet, entre autre, d'obtenir un renforcement de la force de pression de contacts plus rapide sur un front de montée à forte pente du courant dans les bras de contact 203, 204, par exemple lors d'un court-circuit.

Lorsqu'un courant circule dans l'un des bras de contact 203, 204, il se crée un flux magnétique de renforcement de la pression de contact qui circule dans le circuit magnétique de renforcement 210, 211 et traverse ledit bras de contact. Ce flux magnétique a tendance à attirer les bras de contacts 203, 204 vers le bas et à plaquer les contacts principaux mobiles 47, 48 desdits bras de contact sur les contacts principaux fixes 206, 207. Les circuits magnétiques de renforcement 210, 211 permettent ainsi de minimiser les risques de formation d'arc entre les contacts principaux mobiles 47, 48 et les contacts fixes 206, 207 respectifs, comme généralement observé sur les appareils électriques classiques suite à la répulsion des contacts. Ainsi l'érosion des contacts principaux est très fortement minimisée. De plus, les risques de soudure des contacts principaux sont également très fortement diminués.

Dans le cas où le dispositif de coupure selon l'invention est associé à un dispositif limiteur en amont, les circuits magnétiques de renforcement 210, 211 ont également pour fonction de maintenir les contacts principaux fermés pendant toute la durée de la limitation du courant par le dispositif limiteur amont. On garantit ainsi, que les contacts principaux ne s'ouvrent que lorsque le courant de défaut a été très diminué, voire annulé, grâce au dispositif limiteur. Le dispositif de coupure selon l'invention possède deux comportements différents selon que le court-circuit est d'intensité forte ou faible à modérée. Pour un court-circuit fort, c'est-à-dire supérieur à 30 fois le courant nominal du dispositif de coupure aval, par exemple de l'ordre de 90 fois le courant nominal, le dispositif limiteur amont assure la limitation du courant de défaut, de sorte que le dispositif de coupure en aval se comporte comme un interrupteur fermé tant que le courant dépasse un seuil prédéterminé. Dans ce cas, le circuit magnétique de renforcement doit permettre d'assurer le maintien des contacts principaux en position fermée. Pour un court-circuit faible à modéré, c'est-à-dire inférieur à 30 fois le courant nominal du dispositif de coupure aval, par exemple de 10 à 30 fois le courant nominal du dispositif de coupure aval, le dispositif limiteur amont n'intervient pas et la coupure du défaut doit être assurée par le dispositif de coupure aval seul. Dans ce cas, la force de renfort générée par le circuit magnétique de renforcement ne doit pas empêcher l'ouverture des contacts principaux. Il est donc nécessaire de trouver un compromis entre la capacité du dispositif de coupure à rester fermé dans le cas de courts-circuits forts et à s'ouvrir facilement dans le cas de courts-circuits faibles à modérés. Ce compromis a été obtenu par l'agencement particulier décrit ci-après de chaque circuit magnétique 210, 211 de renforcement par rapport au bras de contact mobile 203, 204 auquel il est associé.

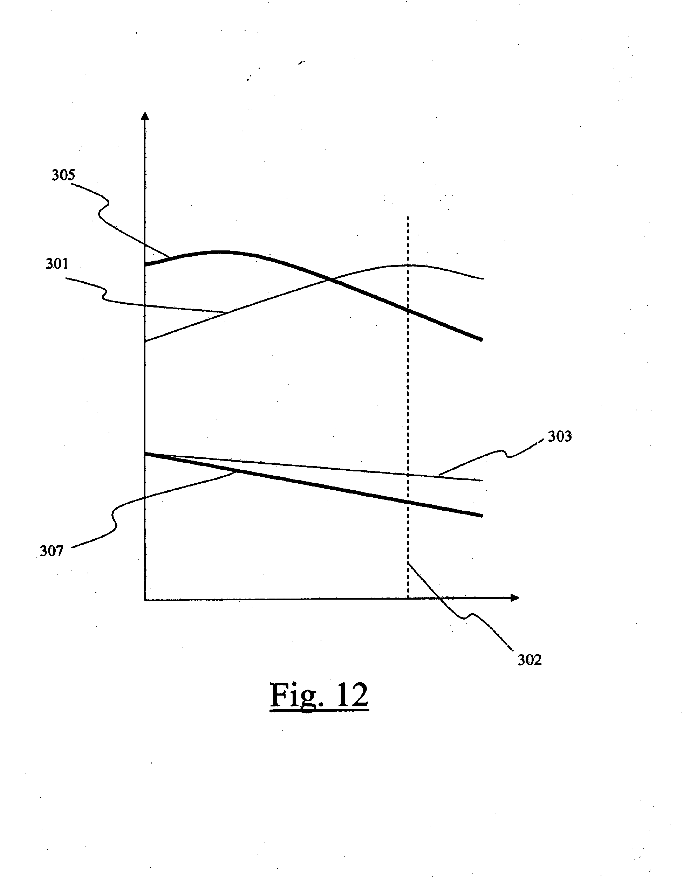

En référence à la figure 12, il a été trouvé que la force de renfort 301 exercée par un circuit magnétique de renforcement, lorsque le bras de contact est parcouru par un courant de court-circuit fort, a tendance à augmenter entre une position du bras de contact dans laquelle ledit bras est complètement recouvert par le circuit de renforcement sur au moins une partie de sa longueur et une position 302 dans laquelle ledit bras de contact dépasse légèrement par rapport au dit circuit magnétique de renforcement. Au-delà de cette dernière position de faible dépassement du bras de contact, cette force de renfort 301 a tendance à décroitre. Cette valeur de la force de renfort 301 appliquée au bras de contact pour le maintenir fermé n'est donc pas optimisée. Dans le cas d'un courant de court-circuit faible à modéré, la force de renfort 303 exercée par un tel circuit magnétique de renforcement, recouvrant complètement ledit bras sur au moins une partie de sa longueur lorsque le bras de contact est fermé, a tendance à décroitre lentement dès l'ouverture dudit bras de contact. Cette décroissance lente de la force de renfort peut avoir tendance à ralentir l'ouverture des contacts principaux.

Il a été trouvé qu'en agençant le circuit magnétique de renforcement 210, 211 par rapport au dit bras de contact 203, 204 de sorte que, lorsque le contact principal mobile est fermé, ledit bras de contact dépasse du circuit de renforcement d'une distance de dépassement prédéterminée, la force de renfort exercée sur ledit bras de contact est optimisée pour maintenir les contacts principaux fermés pendant des courts-circuits de fortes intensités et pour ouvrir plus rapidement lesdits contacts principaux pendant des courts-circuits de faible intensité. Comme cela est visible sur la figure 12, grâce à un tel agencement des circuits magnétique et en particulier au dépassement, la force de renfort 305 est maximisée pour maintenir les contacts principaux fermés pendant des courts-circuits de fortes intensités et la force de renfort 307 décroit plus rapidement, grâce au dépassement, pour ouvrir plus rapidement les contacts principaux pendant des courts-circuits de faible intensité. Les courbes 301, 303 correspondent à la variation de la force de renfort en fonction de la position d'ouverture des contacts principaux en l'absence de dépassement.

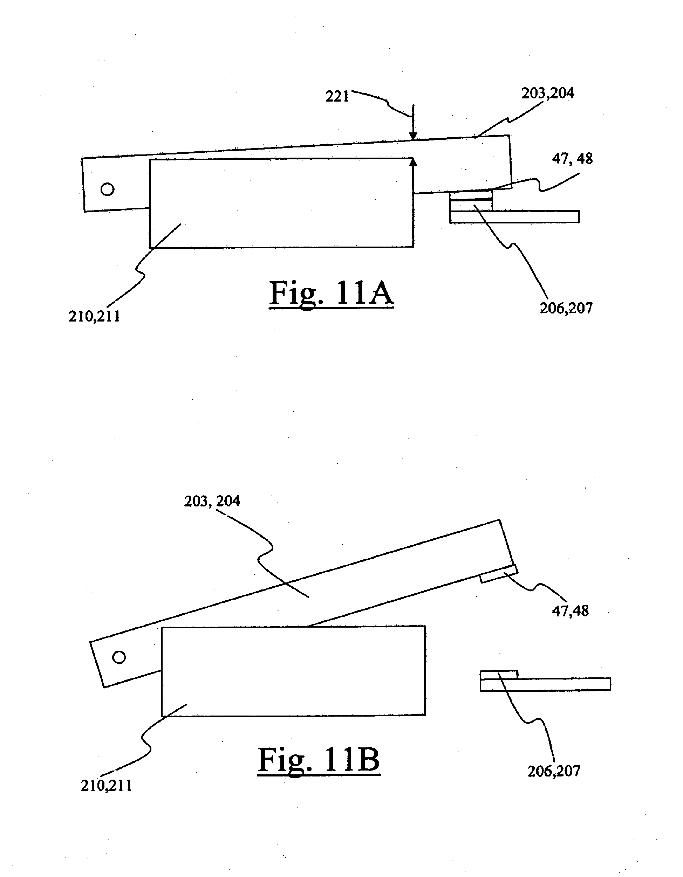

En référence aux figures 11A et 11B, chaque circuit magnétique de renforcement 210, 211 est agencé par rapport au bras de contact 203, 204 auquel il est associé de sorte que, lorsque le contact principal mobile est fermé (figure 11A), ledit bras de contact dépasse du circuit de renforcement d'une distance de dépassement 221 prédéterminée. Cette distance de dépassement, moyennée sur la partie de la longueur du bras de contact recouverte par le circuit magnétique de renforcement, peut être comprise entre 0,5 et 1 millimètre. La distance de dépassement représentée sur la figure 11A sous la référence 221 correspond à une distance maximum non moyennée. Dans le mode de réalisation proposé, la distance de dépassement maximum non moyennée est supérieure ou sensiblement égale à une garde d'usure. Pour un calibre de 10 à 40 Ampères, cette garde d'usure est généralement comprise entre 0,5 et 3 millimètres, par exemple égale à 1 millimètre. Les bras de contact 203, 204 et leurs circuits magnétiques de renforcement 210, 211 respectifs fonctionnent de la manière suivante. Lorsque les bras de contact 203, 204 sont dans une position de fermeture des contacts (figure 11A), lesdits bras de contacts sont légèrement inclinés par rapport à la base des circuits magnétiques de renforcement 210, 211, le bord supérieur desdits bras de contact dépasse légèrement par rapport aux bords supérieurs des branches du « U » desdits circuits magnétiques de renforcement. Ce dépassement des bras de contact 203, 204 par rapport aux circuits magnétiques de renforcement 210, 211 1 est tel qu'il permet de maximiser la force de renfort appliquée sur lesdits bras de contact lorsqu'un courant de court-circuit fort, c'est-à-dire supérieur à 30 fois le courant nominal du dispositif de coupure, circule dans ledit bras de contact. En présence d'un tel courant, une limitation de ce courant peut généralement être assurée par un dispositif limiteur de courant disposé en amont, et la force de renfort 305 (figure 12) appliquée sur les bras de contact 203, 204 est sensiblement maximale, ce qui permet de maintenir les contacts principaux 47, 48, 206, 207 du dispositif de coupure fermés. Dans le cas où un courant de court-circuit faible à modéré, c'est-à-dire inférieur à 30 fois le courant nominal du dispositif de coupure, circule dans les bras de contact 203, 204, la force de renfort 307 appliquée sur lesdits bras de contact est moindre. En présence d'un tel courant, une limitation de ce courant ne peut généralement être réalisée par le dispositif limiteur de courant disposé en amont sous peine de perdre la sélectivité et l'ouverture des contacts principaux 47, 48, 206, 207 est facilitée par la chute rapide de la force de renfort appliquée sur les bras de contact. Au début de l'ouverture des contacts principaux 47, 48, 206, 207 un arc électrique se forme, et un courant continu à circuler dans les bras de contact 203, 204. Comme cela est visible sur la figure 12, la force de renfort 307 appliquée sur les bras de contact 203, 204 décroît plus rapidement avec le dépassement que sans dépassement (303), ce qui permet d'accélérer l'ouverture des contacts principaux et l'extinction de cet arc.

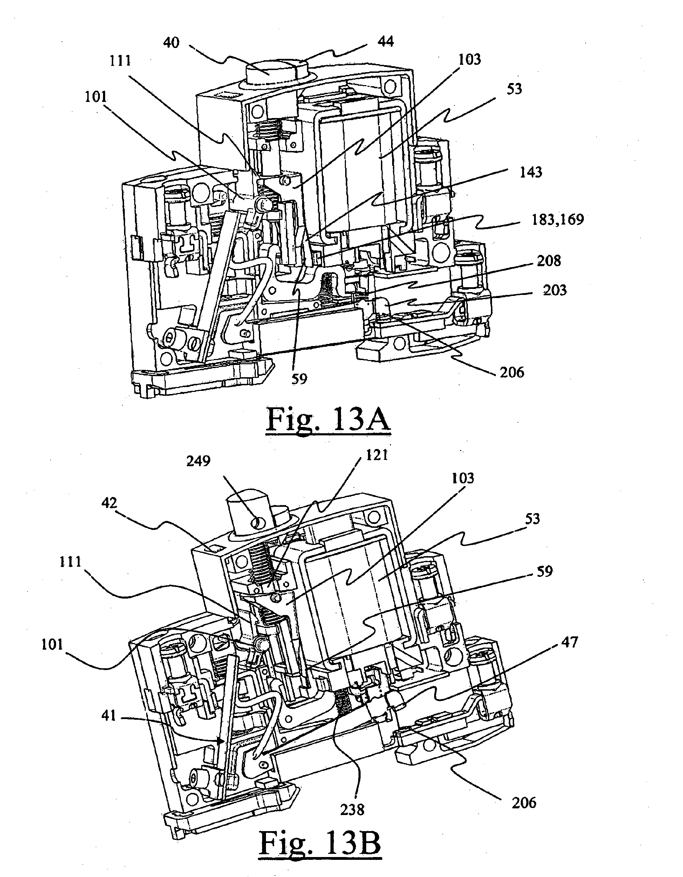

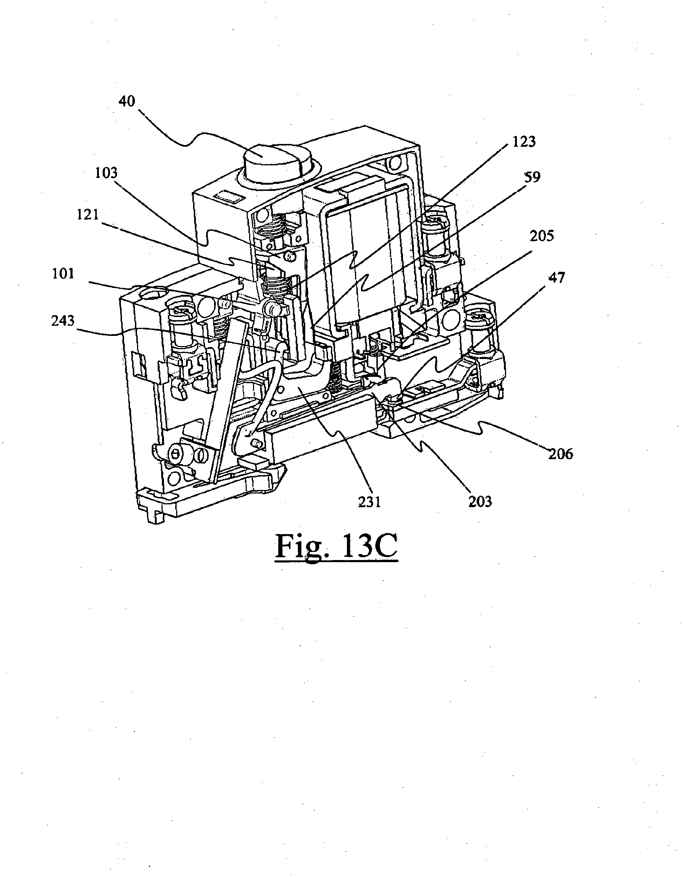

Comme cela est visible sur les figures 4 et 5, le dispositif de coupure comporte un mécanisme de verrouillage du réarmement qui est actif lorsque les contacts principaux 47, 48, 206, 207 sont soudés. Comme cela est expliqué ci-après, ce mécanisme peut être également qualifié de mécanisme de signalisation de soudure des contacts. Cette soudure des contacts peut être par exemple induite par la présence d'un arc électrique, suite à un défaut électrique survenant sur un dispositif de coupure en fin de vie, lorsque les pastilles de contact sont usées. Le mécanisme de verrouillage du réarmement comprend un levier d'accrochage ou biellette 231, ledit levier étant monté basculant sur le boîtier autour d'un axe 233. L'extrémité d'un premier bras 235 du levier d'accrochage 231 est engagée dans l'étrier 205 dans lequel sont également engagés les bras de contacts 203, 204. Ce premier bras 235 du levier d'accrochage 231 est donc directement couplé aux contacts principaux, ce qui permet d'activer le mécanisme de verrouillage du réarmement directement en fonction de la position de ces contacts. Ce premier bras 235 du levier d'accrochage 231 comporte une butée 245 s'appuyant sur un butoir 247 de l'étrier 205 lorsque les contacts principaux sont fermés ou soudés, c'est-à-dire lorsque le noyau plongeur 157 solidaire dudit étrier est maintenu dans sa position déployée par l'entremise de l'actionneur de commande 53 ou à cause de la soudure des contacts principaux. Un ressort de rappel 238 est disposé entre une partie incurvée 239 du levier d'accrochage 231 et une butée solidaire du boîtier, afin d'exercer une force de rappel sur ledit levier d'accrochage vers une position déverrouillée. Cette force de rappel sert également à ramener le noyau plongeur de l'actionneur de commande 53 dans sa position rétractée lorsqu'il n'est plus alimenté et que les contacts ne sont pas soudés. De l'autre côté par rapport à l'axe 233, le levier d'accrochage 231 comporte un crochet 243 à l'extrémité d'un second bras 244, ledit crochet 243 étant destiné à être engagé dans l'oeillet d'accrochage 133 à l'extrémité de la tige d'entraînement 121. Le levier d'accrochage 231 est disposé de sorte que l'engagement de ce crochet 243 dans l'oeillet d'accrochage 133 se fasse, d'une part, lorsque ledit levier d'accrochage 231 est maintenu par l'entremise du premier bras 235 et de l'étrier 205 dans une position verrouillée correspondant à une position de fermeture des bras de contact 203, 204, en l'occurrence à cause de la soudure des contacts principaux, et d'autre part, lorsque la tige d'entraînement 121 est déplacée vers une position déclenchée à la suite d'un déclenchement sur défaut électrique ou d'un déclenchement manuel. En l'occurrence, lorsque le levier d'accrochage 231 est dans la position verrouillée, le crochet 243 dudit levier d'accrochage est positionné dans l'axe de translation de la tige d'entraînement 121, de sorte que l'oeillet 133 de ladite tige d'entraînement vient s'accrocher au dit crochet lorsque ladite tige d'entraînement est déplacée vers sa position déclenchée. Le mécanisme de verrouillage du réarmement comporte, en outre, une ouverture 249 (figure 13B) ménagée dans le bouton de réarmement 40 disposé à l'extrémité opposée de la tige d'entraînement 121 par rapport à l'oeillet d'accrochage 133. Cette ouverture est destinée à recevoir l'anse d'un cadenas pour empêcher le réarmement après l'ouverture des contacts suite à un défaut électrique ou suite à un déclenchement volontaire avec le bouton 42. Plus précisément, cette ouverture 249 est ménagée dans le bouton de réarmement 40 de sorte que cette ouverture soit au moins partiellement escamotée, en l'occurrence complètement escamotée, lorsque la tige d'entraînement est dans sa position déclenchée et que le crochet 243 du levier d'accrochage 231 est engagé dans ledit oeillet d'accrochage (figure 13C), ou lorsque le dispositif de coupure est enclenché sans soudure des contacts (figure 13A). Ainsi, lorsque les contacts principaux sont soudés ou normalement fermé suite à une commande normale de fermeture par le contact extérieur 165, il n'est pas possible de cadenasser le réarmement du dispositif de coupure. Le mécanisme de verrouillage du réarmement opère de la façon suivante. Lorsque les contacts principaux 47, 48, 206, 207 sont soudés, l'ouverture de l'interrupteur de télécommande 165 ne permet pas de rétracter le noyau plongeur 157 et les bras de contacts 203, 204 sont maintenus dans leurs positions de fermeture. L'étrier 205 est donc bloqué dans sa position déployée ou de fermeture des contacts et le levier d'accrochage 231 se trouve ainsi dans sa position de verrouillage. Suite à un déclenchement provoqué par un défaut électrique ou en pressant sur le bouton de déclenchement manuel 42, le verrou 101 est déplacé dans sa position de déverrouillage et vient libérer le levier de contact 103. Ce même levier de contact 103 est déplacé en translation sous la pression du ressort 123 ouvrant le contact 59 alors que la tige d'entraînement 121 sur lequel il est monté sont déplacés en translation vers le haut sous la pression du ressort 131. Lors de ce déplacement de la tige d'entraînement 121, l'oeillet d'accrochage 133 à l'extrémité de ladite tige vient s'accrocher au crochet 243 du levier d'accrochage 231 qui est dans sa position de verrouillage. Le déplacement en translation vers le haut de la tige d'entrainement 121 est donc arrêté avant la fin de sa course. Il en résulte que le bouton de réarmement 40 solidaire de la tige d'entraînement 121 est maintenu dans une position intermédiaire entre une position de déclenchement dans laquelle ledit bouton est en position haute et une position d'armement dans laquelle il est dans une position basse. Cette position intermédiaire du bouton de réarmement 40 permet de signaler la soudure des contacts principaux. De cette façon, le levier d'accrochage 231 a également une fonction de signalisation de la soudure des contacts.

Un avantage du mécanisme de verrouillage de l'armement ou de signalisation de soudure des contacts est que la chaine de détection et de signalisation de la soudure des contacts est essentiellement constituée par le levier d'accrochage 231 et la tige d'entraînement 121. Il s'agit donc d'un mécanisme simple avec peu de pièces mécaniques et donc fiable.

En référence aux figures 13A, 13B, 13C, le dispositif de coupure présenté ci-dessus opère de la façon suivante.

Le dispositif de coupure en fonctionnement normal, c'est-à-dire lorsqu'il est armé, est illustré à la figure 13A. En fonctionnement normal, le verrou 101 est dans une position de verrouillage dans laquelle le crochet 111 maintient le levier de contact 103 dans une position verrouillée. Dans cette position du levier de contact 103, les pastilles de contact 141 du contact de commande mobile 59 disposées sur ledit levier s'appuient sur les lames de contact 181, 183 du contact de commande fixe 169 sous la pression de la lame ressort 143. Par ailleurs, le bouton de réarmement 40 solidaire la tige d'entrainement 121 est dans une position rentrée, c'est-à-dire que la partie supérieure du bouton 40 est au même niveau que le voyant 44 qui renvoie une couleur rouge. La fermeture du contact de commande mobile 59 permet d'alimenter le circuit de commande de l'actionneur de commande 53 et le noyau plongeur 157 dudit actionneur est maintenu dans sa position déployée. L'étrier 205 solidaire du noyau plongeur 157 permet de maintenir les bras de contacts 203, 204 dans une position de fermeture des contacts principaux 47, 48, 206, 207 par l'entremise de la réglette 161. Le ressort de pression de contact 208 vient, quant à lui, faire pression sur les bras de contact 203, 204 pour assurer le passage d'un courant nominal.

Le dispositif en position déclenché est illustré à la figure 13B. Le déclenchement du dispositif peut être la conséquence d'un défaut électrique de type thermique, d'un défaut électrique de type magnétique ou d'un déclenchement manuel par l'entremise du bouton de déclenchement manuel 42. Dans ces trois cas, le verrou 101 a été déplacé dans sa position de déverrouillage par l'entremise des moyens de déclenchement 41 ou du bouton de déclenchement manuel 42, et le levier de contact 103 a été déverrouillé par déplacement du crochet 111 du verrou 101. Après son déverrouillage, le levier de contact 103 et la tige d'entraînement 121 sur lequel il est monté ont été déplacés sous la contrainte exercée par le ressort 131. Le contact de commande mobile 59 se retrouve ainsi dans une position d'ouverture. Par ailleurs, le bouton de réarmement 40 solidaire la tige d'entrainement 121 est complètement sorti et le voyant 44 renvoie une couleur verte, l'ouverture 249 est accessible et le cadenassage est possible. L'ouverture du contact de commande mobile 59 ne permet plus d'alimenter le circuit de commande de l'actionneur de commande 53 et le noyau plongeur 157 dudit actionneur est rappelé dans sa position rétractée stable par le ressort de rappel 238. Les bras de contacts 203, 204 sont dans une position d'ouverture des contacts principaux 47, 48, 206, 207 par l'entremise de l'étrier 205 solidaire du noyau plongeur 157.

Lorsque les contacts principaux 47, 48, 206, 207 sont soudés, le dispositif se trouve dans le même état que celui représenté à la figure 13A. Lorsqu'un déclenchement du dispositif est généré par un courant de défaut ou par le bouton de déclenchement manuel 42, le dispositif de coupure se retrouve dans un nouvel état illustré à la figure 13C. Pendant le déverrouillage du levier de contact 103, ledit levier de contact est déplacé par le ressort 123 et la tige d'entraînement 121 sur lequel il est monté ont été déplacés sous la contrainte exercée par le ressort 131 et le contact de commande mobile 59 est passé en position d'ouverture. Il s'ensuit que le circuit d'actionnement de l'actionneur de commande n'est plus alimenté. Malgré l'absence d'alimentation du circuit d'actionnement, les bras de contact 203, 204 sont maintenus dans leur position de fermeture des contacts principaux 47, 48, 206, 207 et l'étrier 205 reste dans sa position déployée. De ce fait, le levier d'accrochage 231 est maintenu dans une position de verrouillage, et le déplacement en translation de la tige d'entraînement 121 pendant le déverrouillage momentané a été stoppé par l'oeillet d'accrochage 133 qui s'est accroché au crochet 243 du levier d'accrochage 231. Ainsi, le bouton de réarmement 40 solidaire de la tige d'entraînement 121 se retrouve dans une position intermédiaire entre la position rentrée lorsque que le dispositif de coupure est armé et la position sortie lorsque le dispositif de coupure est déclenché. Cette position intermédiaire du bouton de réarmement permet de signaler à l'utilisateur que les contacts principaux 47, 48, 206, 207 sont soudés et que le dispositif de coupure est hors d'état de fonctionnement.

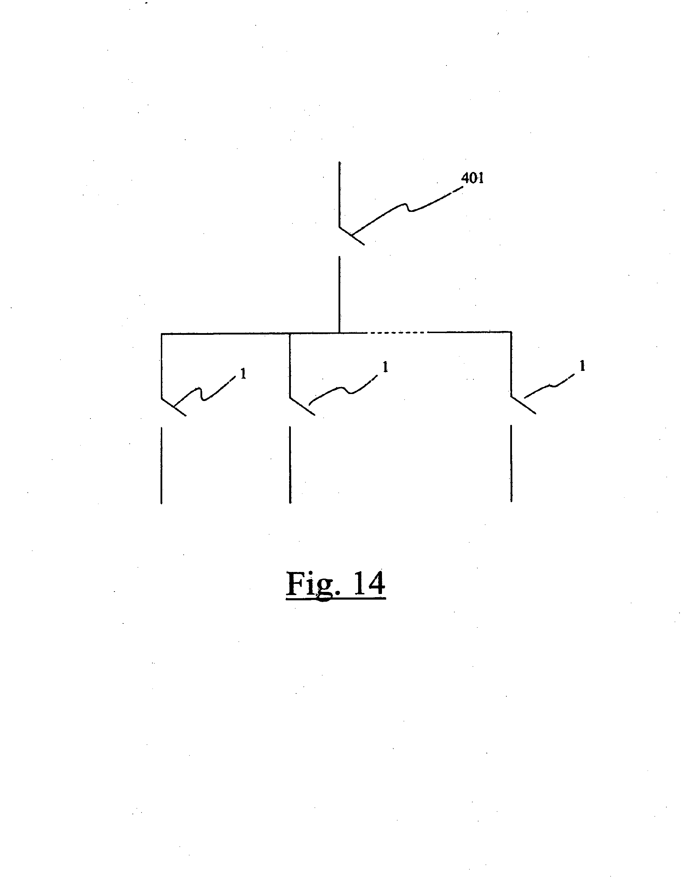

Comme cela est visible sur la figure 14, le dispositif de coupure 1 décrit précédemment peut être utilisé dans des circuits de départ en aval d'un dispositif limiteur de courant 401. En plus de la limitation en courant, le dispositif 401 peut également être conçu pour ouvrir très rapidement le circuit de tête en cas de courant de court-circuit dans l'un des circuits de départs. De cette façon, le courant de tête est également limité avant l'ouverture dispositif de coupure 1 dans le circuit de départ concerné.

## Revendications

1. Dispositif de coupure à télécommande comprenant :
- un contact principal mobile (47, 48) coopérant en position de fermeture avec un contact principal fixe (206, 207),
- un actionneur de commande (53) commandé par un circuit de commande (164, 166) pour faire déplacer ledit contact principal mobile de la position de fermeture à une position d'ouverture dans un sens ou dans l'autre, et
- des moyens de déclenchement (41) apte à déclencher en cas de défaut électrique et coopérant avec un mécanisme de déclenchement (51),
**caractérisé en ce que** ledit circuit de commande comporte un contact de commande mobile (59) actionné par ledit mécanisme de déclenchement (51) pour faire déplacer ledit contact principal mobile de la position de fermeture à la position d'ouverture en réponse à un défaut électrique, ledit contact de commande mobile (59) pouvant se fermer sur un contact de commande fixe (169) disposé sur un socle (159) dudit actionneur de commande (53).

2. Dispositif selon la revendication 1, **caractérisé en ce que** le circuit de commande de l'actionneur de commande (53) comporte des moyens redresseurs (167) disposés sur le socle (159) dudit actionneur de commande.

3. Dispositif selon la revendication 1 ou 2, **caractérisé en ce que** l'actionneur de commande (53) comporte une bobine (153) pour déplacer un noyau plongeur (157) couplé au contact principal mobile (47, 48) lorsqu'un courant d'excitation circule dans ladite bobine, ladite bobine comportant une première bobine d'appel (171) et une seconde bobine de maintien (173), le circuit de commande (164, 166) dudit actionneur de commande (53) comportant un contact mobile de fin de course (175) coopérant avec ledit noyau plongeur et agencé dans ledit circuit de commande pour réduire le courant dans ladite bobine (153) lorsque ledit noyau plongeur est dans une position déployée correspondant à la position de fermeture dudit contact principal mobile.

4. Dispositif selon la revendication 3, **caractérisé en ce que** le contact mobile de fin de course (175) est destiné à s'ouvrir, par rapport à un contact fixe de fin de course (177), lorsque le noyau plongeur (157) est dans une position déployée correspondant à la position de fermeture du contact principal mobile (47, 48).

5. Dispositif selon la revendication 4, **caractérisé en ce que** la première bobine d'appel (171) et la seconde bobine de maintien (173) sont disposés en série, les contacts de fin de course (175, 177) étant disposés en parallèle avec ladite seconde bobine de maintien.

6. Dispositif selon la revendication 4, **caractérisé en ce que** la première bobine d'appel (171) et la seconde bobine de maintien (173) sont disposées en parallèle, les contacts de fin de course (175,177) étant disposés en série avec ladite première bobine de d'appel.

7. Dispositif selon l'une quelconque des revendications 4 à 6, **caractérisé en ce que** le contact fixe de fin de course (177) est disposé sur le socle (159) dudit actionneur de commande (53).

8. Dispositif selon l'une quelconque des revendications précédentes, **caractérisé en ce que** les moyens de déclenchement (41), le mécanisme de déclenchement (51) et l'actionneur de commande (53) sont montés sur une cloison séparant un circuit de phase d'un circuit de neutre dudit dispositif, le tout formant un sous-ensemble amovible.

9. Dispositif de coupure à télécommande selon l'une quelconque des revendications précédentes, ledit dispositif étant logé dans un boîtier pourvu de faces principales (14,15) et de faces de connexions (21,22,23) sensiblement perpendiculaires aux dites faces principales et pourvues d'ouvertures (25-28) permettant l'accès à des bornes de raccordement, ledit dispositif de coupure comprenant :
- un actionneur de commande (53) commandé par un circuit de commande (164,166) pour faire déplacer ledit contact principal mobile de la position de fermeture à une position d'ouverture dans un sens ou dans l'autre au moyen d'un contact de commande mobile (59) dudit circuit de commande, et
- des moyens de déclenchement (41) pourvus de moyens de déclenchement magnétique (45) et d'une bilame (43) coopérant avec un mécanisme de déclenchement (51),
**caractérisé en ce que** ledit mécanisme de déclenchement (51) coopère avec ledit contact de commande mobile pour ouvrir ledit contact principal mobile de la position de fermeture à la position d'ouverture en réponse à un défaut électrique, et
**en ce que** les moyens de déclenchement magnétiques (45) et la bilame (43) sont disposés dans un plan sensiblement parallèle aux faces de connexions.

10. Dispositif selon la revendication 9, **caractérisé en ce que** la bilame (43) s'étend entre deux plans (P1,P2) sensiblement parallèles aux faces de connexions (21,22,23) dans les limites des moyens de déclenchement magnétique (45).

11. Dispositif selon la revendication 9 ou 10, **caractérisé en ce que** la déflexion de la bilame (43) s'effectue dans un plan parallèle et selon une direction sensiblement perpendiculaire à un axe d'actionnement de l'actionneur de commande (53).

12. Dispositif selon l'une quelconque des revendications 9 à 11, **caractérisé en ce que** la déflexion de la bilame (43) s'effectue dans un plan parallèle aux faces principales (14,15) et selon une direction sensiblement perpendiculaire à un axe de déplacement d'un noyau plongeur (73) des moyens de déclenchement magnétique (45).

13. Dispositif selon l'une quelconque des revendications 9 à 12, **caractérisé en ce que** les moyens de déclenchement (41), le mécanisme de déclenchement (51) et l'actionneur de commande (53) sont disposés sensiblement dans un même plan parallèle aux faces principales (14,15).

14. Dispositif selon l'une quelconque des revendications 9 à 13, **caractérisé en ce que** la distance entre les faces principales (14,15) est sensiblement égale à un nombre de pôles dudit dispositif multiplié par une largeur polaire normalisée.

15. Dispositif de distribution électrique comprenant un dispositif limiteur de courant (301) disposé en amont d'au moins un circuit de départ pourvu d'un dispositif de coupure (1), **caractérisé en ce que** ledit dispositif de coupure est selon l'une des revendications précédentes, ledit dispositif de coupure comprenant des moyens de déclenchement permettant d'ouvrir le circuit de départ lorsque le courant dans ledit circuit a été limité.

## Patentansprüche

1. Schalteinrichtung mit Fernantrieb, umfassend
- einen beweglichen Hauptkontakt (47, 48), der in der Einschaltstellung mit einem feststehenden Hauptkontakt (206, 207) zusammenwirkt,
- ein Betätigungs-Steuerglied (53), das über eine Steuerschaltung (164, 166) angesteuert wird, um den genannten beweglichen Hauptkontakt zwischen der Einschaltstellung und einer Ausschaltstellung in der einen oder der anderen Richtung zu verschieben, sowie
- Auslösemittel (41), die mit einem Auslösemechanismus (51) zusammenwirken und dazu ausgelegt sind, im Fehlerfall eine Auslösung zu bewirken,
**dadurch gekennzeichnet, dass** die genannte Steuerschaltung einen beweglichen Steuerkontakt (59) umfasst, der über den genannten Auslösemechanismus (51) angesteuert wird, um bei Auftreten eines elektrischen Fehlers den genannten beweglichen Hauptkontakt von der Einschaltstellung in die Ausschaltstellung zu verbringen, welcher bewegliche Steuerkontakt (59) mit einem auf einem Sockel (159) des genannten Betätigungs-Steuerglieds (53) angeordneten feststehenden Steuerkontakt (169) in Kontakt gebracht werden kann.

2. Einrichtung nach Anspruch 1, **dadurch gekennzeichnet, dass** die Steuerschaltung des Betätigungs-Steuerglieds (53) auf dem Sockel (159) des genannten Betätigungs-Steuerglieds angeordnete Gleichrichtmittel (167) umfasst.

3. Einrichtung nach Anspruch 1 oder 2, **dadurch gekennzeichnet, dass** das Betätigungs-Steuerglied (53) eine Spule (153) umfasst, um einen mit dem beweglichen Hauptkontakt (47, 48) verbundenen Tauchkern (157) zu verschieben, wenn ein Erregerstrom über die genannte Spule fließt, wobei die genannte Spule eine erste Einschaltspule (171) sowie eine zweite Haltespule (173) umfasst und die Steuererschaltung (164, 166) des genannten Betätigungs-Steuerglieds (53) einen beweglichen Endlagenkontakt (175) umfasst, der mit dem genannten Tauchkern zusammenwirkt und in die genannte Steuerschaltung integriert ist, um den über die genannte Spule (153) fließenden Strom zu verringern, wenn sich der genannte Tauchkern in einer Ausrückstellung entsprechend der Einschaltstellung des genannten beweglichen Hauptkontakts befindet.

4. Einrichtung nach Anspruch 3, **dadurch gekennzeichnet, dass** der bewegliche Endlagenkontakt (175) dazu dient, sich von einem feststehenden Endlagenkontakt (177) abzuheben, wenn sich der Tauchkern (157) in einer Ausrückstellung entsprechend der Einschaltstellung des beweglichen Hauptkontakts (47, 48) befindet.

5. Einrichtung nach Anspruch 4, **dadurch gekennzeichnet, dass** die erste Einschaltspule (171) und die zweite Haltespule (173) in Reihe geschaltet sind und die Endlagenkontakte (175, 177) parallel zur genannten zweiten Haltespule geschaltet sind.

6. Einrichtung nach Anspruch 4, **dadurch gekennzeichnet, dass** die erste Einschaltspule (171) und die zweite Haltespule (173) parallel geschaltet sind und die Endlagenkontakte (175, 177) in Reihe zur genannten ersten Einschaltspule geschaltet sind.

7. Einrichtung nach irgendeinem der Ansprüche 4 bis 6, **dadurch gekennzeichnet, dass** der feststehende Endlagenkontakt (177) auf dem Sockel (159) des genannten Betätigungs-Steuerglieds (53) angeordnet ist.

8. Einrichtung nach irgendeinem der vorhergehenden Ansprüche, **dadurch gekennzeichnet, dass** die Auslösemittel (41), der Auslösemechanismus (51) und das Betätigungs-Steuerglied (53) auf einer zwischen einem Phasenkreis und einem Neutralleiterkreis der Einrichtung angeordneten Trennwand montiert sind, wobei die genannten Komponenten eine gemeinsame, ausbaubare Baueinheit bilden.

9. Schalteinrichtung mit Fernantrieb nach irgendeinem der vorhergehenden Ansprüche, welche Einrichtung in einem Gehäuse mit Hauptseiten (14, 15) und Anschlussseiten (21, 22, 23) angeordnet ist, wobei die Anschlussseiten annähernd senkrecht zu den genannten Hauptseiten angeordnet sind und Öffnungen (25 - 28) für den Zugang zu Anschlussklemmen aufweisen, welche Schalteinrichtung
- ein Betätigungs-Steuerglied (53), das über eine Steuerschaltung (164, 166) angesteuert wird, um den genannten beweglichen Hauptkontakt mithilfe eines beweglichen Steuerkontakts (59) der genannten Steuerschaltung zwischen der Einschaltstellung und einer Ausschaltstellung in der einen oder der anderen Richtung zu verschieben, sowie
- Auslösemittel (41) mit magnetischen Auslösemitteln (45) und einem Bimetall (43) umfasst, die mit einem Auslösemechanismus (51) zusammenwirken,
**dadurch gekennzeichnet, dass** der genannte Auslösemechanismus (51) mit dem genannten beweglichen Steuerkontakt zusammenwirkt, um bei Auftreten eines elektrischen Fehlers den genannten beweglichen Hauptkontakt durch Überführung von der Einschaltstellung in die Ausschaltstellung zu öffnen, sowie dadurch, dass
die magnetischen Auslösemittel (45) und das Bimetall (43) in einer annähernd parallel zu den Anschlussflächen liegenden Ebene angeordnet sind.

10. Einrichtung nach Anspruch 9, **dadurch gekennzeichnet, dass** das Bimetall (43) zwischen zwei annähernd parallel zu den Anschlussflächen (21, 22, 23) liegenden Ebenen (P1, P2), innerhalb der Kontur der magnetischen Auslösemittel (45) angeordnet ist.

11. Einrichtung nach Anspruch 9 oder 10, **dadurch gekennzeichnet, dass** die Biegung des Bimetalles (43) in einer Parallelebene sowie einer annähernd senkrecht zu einer Wirkachse des Betätigungs-Steuerglieds (53) verlaufenden Richtung erfolgt.

12. Einrichtung nach Anspruch 9 bis 11, **dadurch gekennzeichnet, dass** die Biegung des Bimetalls (43) in einer parallel zu den Haupt-Seitenflächen (14, 15) verlaufenden Ebene sowie einer annähernd senkrecht zu einer Verschiebeachse eines Tauchkerns (73) der magnetischen Auslösemittel (45) verlaufenden Richtung erfolgt.

13. Einrichtung nach irgendeinem der Ansprüche 9 bis 12, **dadurch gekennzeichnet, dass** die Auslösemittel (41), der Auslösemechanismus (51) und das Betätigungs-Steuerglied (53) in einer annähernd gleichen, parallel zu den Hauptseiten (14, 15) verlaufenden Ebene angeordnet sind.

14. Einrichtung nach irgendeinem der Ansprüche 9 bis 13, **dadurch gekennzeichnet, dass** der Abstand zwischen den Hauptseiten (14, 15) annähernd dem Produkt aus der Anzahl der Pole der genannten Einrichtung und der Normbreite eines Pols entspricht.

15. Installationsverteiler mit einer strombegrenzenden Einrichtung (301), die auf der Einspeiseseite mindestens eines mit einer Schalteinrichtung (1) beschalteten Verbraucherabgangs installiert ist, **dadurch gekennzeichnet, dass** die genannte Schalteinrichtung nach einem der vorhergehenden Ansprüche ausgeführt ist und Auslösemittel umfasst, die eine Abschaltung des Verbraucherabgangs erlauben, wenn der über den genannten Abgang fließende Strom begrenzt ist.

## Claims

1. Remotely controlled interruption device comprising:
- a moving main contact (47, 48) cooperating in the closure position with a fixed main contact (206, 207),
- a control actuator (53) controlled by a control circuit (164, 166) so as to displace the said moving main contact from the closure position to an opening position in one direction or in the other, and
- triggering means (41) able to trigger in case of electrical fault and cooperating with a triggering mechanism (51),
**characterized in that** the said control circuit comprises a moving control contact (59) actuated by the said triggering mechanism (51) so as to displace the said moving main contact from the closure position to the opening position in response to an electrical fault, the said moving control contact (59) being able to close onto a fixed control contact (169) disposed on a base (159) of the said control actuator (53).

2. Device according to Claim 1, **characterized in that** the control actuator (53) control circuit comprises rectifier means (167) disposed on the base (159) of the said control actuator.

3. Device according to Claim 1 or 2, **characterized in that** the control actuator (53) comprises a coil (153) to displace a plunger core (157) coupled to the moving main contact (47, 48) when an excitation current flows in the said coil, the said coil comprising a first pull-in coil (171) and a second hold-in coil (173), the control circuit (164, 166) of the said control actuator (53) comprising an end-of-travel moving contact (175) cooperating with the said plunger core and arranged in the said control circuit so as to reduce the current in the said coil (153) when the said plunger core is in a deployed position corresponding to the closure position of the said moving main contact.

4. Device according to Claim 3, **characterized in that** the end-of-travel moving contact (175) is intended to open, with respect to an end-of-travel fixed contact (177), when the plunger core (157) is in a deployed position corresponding to the closure position of the moving main contact (47, 48).

5. Device according to Claim 4, **characterized in that** the first pull-in coil (171) and the second hold-in coil (173) are disposed in series, the end-of-travel contacts (175, 177) being disposed in parallel with the said second hold-in coil.

6. Device according to Claim 4, **characterized in that** the first pull-in coil (171) and the second hold-in coil (173) are disposed in parallel, the end-of-travel contacts (175, 177) being disposed in series with the said first pull-in coil.

7. Device according to any one of Claims 4 to 6, **characterized in that** the end-of-travel fixed contact (177) is disposed on the base (159) of the said control actuator (53).

8. Device according to any one of the preceding claims, **characterized in that** the triggering means (41), the triggering mechanism (51) and the control actuator (53) are mounted on a partition separating a phase circuit from a neutral circuit of the said device, the whole forming a removable sub-assembly.

9. Remotely controlled interruption device according to any one of the preceding claims, the said device being housed in a casing provided with main faces (14,15) and with connection faces (21,22,23) substantially perpendicular to the said main faces and provided with openings (25-28) allowing access to attachment terminals, the said interruption device comprising:
- a control actuator (53) controlled by a control circuit (164,166) so as to displace the said moving main contact from the closure position to an opening position in one direction or in the other by means of a moving control contact (59) of the said control circuit, and
- triggering means (41) provided with magnetic triggering means (45) and with a bimetallic strip (43) cooperating with a triggering mechanism (51),
**characterized in that** the said triggering mechanism (51) cooperates with the said moving control contact so as to open the said moving main contact from the closure position to the opening position in response to an electrical fault, and
**in that** the magnetic triggering means (45) and the bimetallic strip (43) are disposed in a plane substantially parallel to the connection faces.

10. Device according to Claim 9, **characterized in that** the bimetallic strip (43) extends between two planes (P1,P2) substantially parallel to the connection faces (21,22,23) within the limits of the magnetic triggering means (45).

11. Device according to Claim 9 or 10, **characterized in that** the deflection of the bimetallic strip (43) occurs in a plane parallel and in a direction substantially perpendicular to an axis of actuation of the control actuator (53).

12. Device according to any one of Claims 9 to 11, **characterized in that** the deflection of the bimetallic strip (43) occurs in a plane parallel to the main faces (14,15) and in a direction substantially perpendicular to an axis of displacement of a plunger core (73) of the magnetic triggering means (45).

13. Device according to any one of Claims 9 to 12, **characterized in that** the triggering means (41), the triggering mechanism (51) and the control actuator (53) are disposed substantially in one and the same plane parallel to the main faces (14,15).

14. Device according to any one of Claims 9 to 13, **characterized in that** the distance between the main faces (14,15) is substantially equal to a number of poles of the said device multiplied by a normalized polar width.

15. Electrical distribution device comprising a current-limiting device (301) disposed upstream of at least one outbound circuit provided with an interruption device (1), **characterized in that** the said interruption device is according to one of the preceding claims, the said interruption device comprising triggering means making it possible to open the outbound circuit when the current in the said circuit has been limited.
